(19) **Europäisches Patentamt / European Patent Office / Office européen des brevets**

(11) **EP 4 443 813 A1**

(12) # EUROPEAN PATENT APPLICATION
published in accordance with Art. 153(4) EPC

(43) Date of publication:
**09.10.2024 Bulletin 2024/41**

(21) Application number: **21966457.0**

(22) Date of filing: **03.12.2021**

(51) International Patent Classification (IPC):
**H04L 9/32** (2006.01)     **G06F 7/04** (2006.01)

(52) Cooperative Patent Classification (CPC):
**G06F 7/02; H04L 9/32**

(86) International application number:
**PCT/JP2021/044588**

(87) International publication number:
**WO 2023/100379 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **FUKUOKA, Takeru**
  **Kawasaki-shi, Kanagawa 211-8588 (JP)**
• **SAKAMOTO, Takuya**
  **Kawasaki-shi, Kanagawa 211-8588 (JP)**
• **YAMAOKA, Mebae**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57)    A business operator (C) accepts $g^m$, an electronic signature, and zero-knowledge proof text ($\Pi$) of the electronic signature from a job applicant (A). Encrypted data obtained by encrypting attribute information (m) by indexing using a key (g) of the job applicant (A) is represented by $g^m$. The business operator (C) accepts $h^{1/n}$ from a company (B). Encrypted data obtained by encrypting requirement information (n) by indexing using a key (h) of the company (B) is represented by $h^{1/n}$. The business operator (C) receives, from a key management server (202), information regarding pairing calculation (pairing e, calculation result $e_{AB}(g, h)$). In a case where validity of the electronic signature is verified using the zero-knowledge proof text ($\Pi$), the business operator (C) performs matching using a bi-homomorphism of the pairing without decoding plain text from the encrypted data.

FIG. 9

KEY MANAGEMENT SERVER — 202

JOB APPLICANT A — KEY g — SIGNATURE
EDUCATIONAL BACKGROUND: GRADUATE OF X UNIVERSITY — m

ZERO-KNOWLEDGE PROOF TEXT Π

BUSINESS OPERATOR C — e、 $e_{AB}=e(g,h)$

EDUCATIONAL BACKGROUND: F32R3 — $g^m$

REQUESTED EDUCATIONAL BACKGROUND: 4n4Gg,a3QCs,... — $h^{1/n1}, h^{1/n2},...$

COMPANY B — KEY h
REQUESTED EDUCATIONAL BACKGROUND: GRADUATE OF X UNIVERSITY, GRADUATE OF Y UNIVERSITY, ... — n1,n2,...

## Description

### TECHNICAL FIELD

The present invention relates to an information processing program, an information processing method, and an information processing device.

### BACKGROUND ART

A matching system is a service for combining demand with supply. The matching system is developed in various forms such as recruitment matching, resource matching, a free market, and a matching app. In the matching system, for example, matching between users is performed by matching attribute information submitted by a user with an interest in an attribute submitted by another user.

As prior art, for example, there is a technology of aggregating medical records in a manner that protects identity of a patient. Furthermore, there is a technology of generating concealed media information in which at least a part of a feature portion of a visitor is concealed, and collating the concealed media information with accumulated registered concealed media information while keeping them concealed to generate a collation result. The registered concealed media information is information in which at least a part of a feature portion of an unspecified person is concealed in media information in which the person is recorded.

### CITATION LIST

### PATENT DOCUMENT

Patent Document 1: U.S. Patent Application Publication No. 2015/0149208
Patent Document 2: Japanese Laid-open Patent Publication No. 2016-71639

### SUMMARY OF INVENTION

### TECHNICAL PROBLEM

However, in the prior art, it is difficult to secure authenticity of data regarding users to be matched while concealing content of the data from a third party.

In one aspect, an object of the present invention is to secure authenticity of data while concealing content of the data from a third party.

### SOLUTION TO PROBLEM

In one embodiment, there is provided an information processing program that accepts first encrypted data obtained by encrypting first data by indexing that uses a first key, an electronic signature added to the first data, and proof information to prove that the electronic signature is information capable of verifying authenticity of original data of the first encrypted data, accepts second encrypted data obtained by encrypting second data by indexing that uses a second key, verifies validity of the electronic signature by using the proof information, acquires a first calculation result calculated from the first key and the second key by using a predetermined function from a management device that manages the first key and the second key, and collates the acquired first calculation result with a second calculation result calculated from the first encrypted data and the second encrypted data by using the predetermined function.

### ADVANTAGEOUS EFFECTS OF INVENTION

According to one aspect of the present invention, it is possible to achieve an effect of securing authenticity of data while concealing content of the data from a third party.

### BRIEF DESCRIPTION OF DRAWINGS

FIG. 1 is an explanatory diagram illustrating an example of an information processing method according to a first embodiment.
FIG. 2 is an explanatory diagram illustrating a system configuration example of an information processing system 200.
FIG. 3 is a block diagram illustrating a hardware configuration example of a matching device 201 or the like.
FIG. 4 is an explanatory diagram illustrating an example of content stored in a key storage DB 220.
FIG. 5 is a block diagram illustrating a functional configuration example of a key management server 202.
FIG. 6 is a block diagram illustrating a functional configuration example of a client terminal Ci.
FIG. 7 is a block diagram illustrating a functional configuration example of the matching device 201.
FIG. 8 is an explanatory diagram illustrating an example of matching processing of the matching device 201.
FIG. 9 is an explanatory diagram illustrating an operation example of the information processing system 200 according to the first embodiment.
FIG. 10 is a flowchart illustrating an example of a setup processing procedure of the key management server 202.
FIG. 11 is a flowchart illustrating an example of a key generation/update processing procedure of the client terminal Ci.
FIG. 12 is a flowchart illustrating an example of a key registration processing procedure of the key management server 202.

FIG. 13 is a sequence diagram (part 1) illustrating a matching processing procedure of the information processing system 200.

FIG. 14 is a sequence diagram (part 2) illustrating the matching processing procedure of the information processing system 200.

FIG. 15 is a flowchart illustrating an example of a specific processing procedure of proof generation processing of the client terminal Ci.

FIG. 16 is a flowchart illustrating an example of a specific processing procedure of proof verification processing of the matching device 201.

FIG. 17 is a flowchart illustrating an example of a specific processing procedure of collation processing of the matching device 201.

FIG. 18 is an explanatory diagram illustrating an example of the information processing system 200.

FIG. 19 is an explanatory diagram illustrating an operation example of an information processing system 200 according to a second embodiment.

DESCRIPTION OF EMBODIMENTS

Hereinafter, embodiments of an information processing program, an information processing method, and an information processing device according to the present invention will be described in detail with reference to the drawings.

(Embodiments)

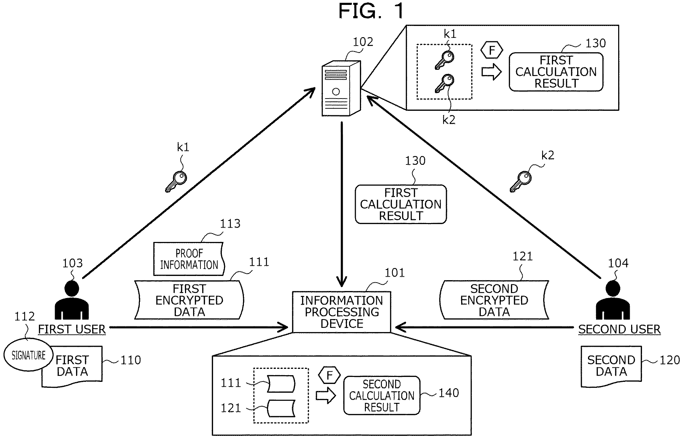

FIG. 1 is an explanatory diagram illustrating an example of an information processing method according to a first embodiment. In FIG. 1, an information processing device 101 is a computer that performs collation between encrypted pieces of data. The collation between the encrypted pieces of data is, for example, to determine whether or not the encrypted pieces of data match by performing matching between the encrypted pieces of data.

Original plain text (original data) of the encrypted pieces of data is data regarding users to be matched, and is, for example, attribute information or requirement information. The attribute information is information indicating an attribute of a user. The requirement information is information indicating a condition (interest or the like) for an attribute requested by a user.

In a matching system, for example, matching between users is performed by matching attribute information submitted by a user with an interest in an attribute submitted by another user. Taking recruitment matching as an example, matching is performed by matching attribute information (age, an educational background, a work history, and the like) submitted by a student with employment conditions (age, an educational background, a work history, and the like) submitted by a company.

However, in the existing matching system, correctness of attribute information to be submitted by a user may not be strictly requested, or even when the correctness is requested, check of the correctness may not be automated, and it is difficult to secure authenticity of the attribute information. For example, in the recruitment matching, although the student submits his/her own educational background, grade, and the like, proof of correctness thereof may often not be made obligatory, and a mechanism that automatically checks the correctness may often not be prepared.

Furthermore, in the matching system, a user may submit his/her personal data to an operator of the matching system without any processing. In this case, a large amount of personal data is accumulated in the operator, and the user has a concern about privacy or the operator considers a risk at the time of leakage.

Here, regarding the problem of authenticity of the attribute information, the authenticity may be verified by adding a signature to the attribute information submitted by the user by a trusted third party using various existing electronic signature methods. However, the problem of the privacy may not be solved only by the electronic signature method.

On the other hand, regarding the problem of the privacy, by using an existing technology such as Relational Hash (Non-Patent Document 1), it is possible to cause a third party to perform matching while concealing the attribute information and the interest in the attribute submitted by the users. However, the problem of the authenticity of the attribute information may not be solved only by the Relational Hash method.

The Relational Hash is a method of hashing two types of plain text satisfying a certain relationship (for example, a relationship of equal) by using a certain key, and is a technology that allows a third party who knows the key to know whether the two types of plain text satisfy the relationship without knowing original plain text. Note that, regarding the Relational Hash, for example, the following Non-Patent Document 1 may be referred to.

Non-Patent Document 1: Mandal, Avradip, and Arnab Roy. "Relational hash: probabilistic hash for verifying relations, secure against forgery and more." Annual Cryptology Conference. Springer, Berlin, Heidelberg, 2015.

Here, the problem of the authenticity of the attribute information will be described by taking a case where the Relational Hash method is applied to the recruitment matching as an example. First, a trusted third party prepares one key, and the key is shared between users. A student hashes attribute information (educational background) to be submitted by using a hash function Hash1. A company hashes a recruitment requirement (educational background) that is an interest in an attribute by using a hash function Hash2.

Then, a matching business operator performs matching without knowing original plain text of hash values by using the same key provided from the trusted third party. At this time, the matching business operator may detect that the two character strings (hash values) are originally hashes of equal plain text or originally hashes of different types of plain text, but may not know content of the original plain text. Therefore, privacy related to the educational background of the student is protected.

As described above, in the Relational Hash method, while the problem of the privacy is solved, the problem of the authenticity of the attribute information may not be solved. Furthermore, there is an electronic signature technology as a technology of securing correctness of the attribute information, but a signature for plain text is not a signature for a hash value, and thus may not be directly applied.

For example, in the case where the Relational Hash method is applied to recruitment matching, it is assumed that an electronic signature is added to the attribute information (educational background) of the student, and authenticity of the attribute information (educational background) is secured. However, since the electronic signature is not valid for the hash value of the attribute information (educational background), the authenticity may not be secured.

Note that it is conceivable to request to add a signature again to the hash value of the attribute information (educational background) using the existing electronic signature technology. For example, it is assumed that the attribute information (educational background) is a name of a graduated university of the student, and the electronic signature added to the attribute information is a signature of the graduated university. In this case, a method is conceivable in which the signature of the graduated university is added also to a hash value of the attribute information (educational background).

However, in this method, the university side issues the signature to the hash value. Therefore, the university side needs to understand which plain text hash value the hash value is. However, hashing in the Relational Hash is a probabilistic algorithm.

Thus, for example, even when plain text m, a hash value H, and the hash function Hash1 are presented to the university side, it is difficult for the university side to confirm that "the hash value H is obtained by hashing the plain text m by the hash function Hash1". Moreover, since this method also requires the university that issues the signature to develop a new application, and the like, there is a possibility that an operation cost of the matching system increases.

Thus, in the present embodiment, an information processing method of securing authenticity of data regarding users to be matched while concealing content of the data from a third party will be described. Hereinafter, processing examples ((1) to (5) below) of the information processing device 101 will be described.

(1) The information processing device 101 accepts first encrypted data 111, an electronic signature 112, and proof information 113. Here, the first encrypted data 111 is information (ciphertext) obtained by encrypting first data 110 by indexing using a first key k1. The first data 110 is data regarding a first user 103 to be matched, and is, for example, attribute information indicating an attribute of the first user 103.

The first key k1 is a key used for encryption, is generated by the first user 103, and is managed in a management device 102. The electronic signature 112 is a signature added to the first data 110, and is, for example, information capable of verifying authenticity of the first data 110 using a public key of a signer.

The proof information 113 is information for proving that the electronic signature 112 is information capable of verifying authenticity of the original data of the first encrypted data 111. The proof information 113 includes, for example, zero-knowledge proof text for proving that the electronic signature 112 is information capable of verifying the authenticity of the original data of the first encrypted data 111 using the public key of the signer. The zero-knowledge proof is a method of proving the fact that one knows confidential information without disclosing the confidential information itself to a verifier.

(2) The information processing device 101 accepts second encrypted data 121. Here, the second encrypted data 121 is information (ciphertext) obtained by encrypting second data 120 by indexing using a second key k2. The second data 120 is data regarding a second user 104 to be matched, and is, for example, requirement information indicating a condition for an attribute requested by the second user 104. The second key k2 is a key used for encryption, is generated by the second user 104, and is managed in the management device 102.

(3) The information processing device 101 verifies validity of the electronic signature 112 using the proof information 113. By verifying the validity of the electronic signature 112 using the proof information 113, the information processing device 101 secures authenticity of the first encrypted data 111, and eventually, secures the authenticity of the original data (first data 110) of the first encrypted data 111.

Specifically, for example, the information processing device 101 verifies the validity of the electronic signature 112 by proving the zero-knowledge proof text included in the proof information 113 using the public key, the electronic signature 112, and the first encrypted data 111. For example, the public key may be included in the proof information 113, or may be acquired from the signer of the electronic signature 112.

(4) The information processing device 101 acquires a first calculation result 130 from the management device 102. The first calculation result 130 is a calculation result calculated from the first key k1 and the second key k2 using a predetermined function F. The predetermined function F is, for example, a pairing function that performs calculation having a bi-homomorphism. The management device 102 is an example of a trusted third party, and manages the first key k1 and the second key k2 so as not to be disclosed to the outside.

(5) The information processing device 101 collates the acquired first calculation result 130 with a second calculation result 140 calculated from the first encrypted data 111 and the second encrypted data 121 using the predetermined function F. Specifically, for example, the information processing device 101 determines whether or not the first calculation result 130 and the second calculation result 140 match using the bi-homomorphism of the predetermined function F, thereby determining whether the original data (the first data 110 and the second data 120) are equal to each other.

As described above, according to the information processing device 101, it is possible to secure authenticity of data regarding users to be matched while concealing content of the data from a third party. For example, by using encryption by indexing for concealing the first data 110, the first encrypted data 111 may be simplified to generate the proof information 113 such as the zero-knowledge proof text, and the authenticity of the first data 110 added with the signature may be secured. Moreover, since an approach of also adding a signature to the first encrypted data 111 is not taken, a procedure such as requesting the signer to further issue a signature does not have to be performed. Furthermore, for example, by using encryption by indexing and the bi-homomorphism of pairing, it is possible to perform matching between the users while concealing content of the first data 110 and the second data 120 for the first user 103 and the second user 104 from a third party (for example, a matching business operator).

(System Configuration Example of Information Processing System 200)

Next, a system configuration example of an information processing system 200 according to the first embodiment will be described. The information processing system 200 is applied to, for example, a matching system such as recruitment matching, resource matching, a free market, and a matching app.

In the following description, a case where the information processing device 101 illustrated in FIG. 1 is applied to a matching device 201 in the information processing system 200 will be described as an example. Furthermore, a case where the management device 102 illustrated in FIG. 1 is applied to a key management server 202 in the information processing system 200 will be described as an example.

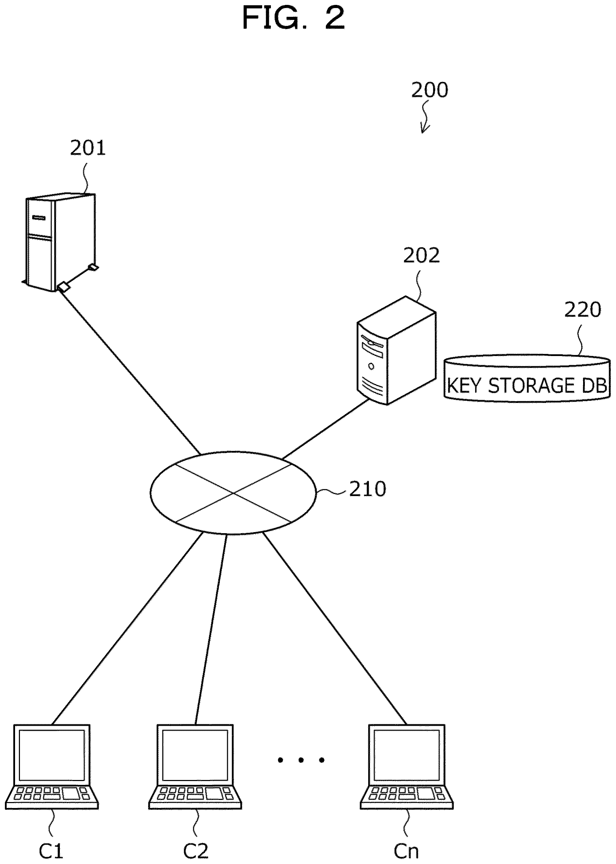

FIG. 2 is an explanatory diagram illustrating the system configuration example of the information processing system 200. In FIG. 2, the information processing system 200 includes the matching device 201, the key management server 202, and client terminals C1 to Cn (n: natural number of 2 or more). In the information processing system 200, the matching device 201, the key management server 202, and the client terminals C1 to Cn are coupled via a wired or wireless network 210. The network 210 is, for example, a local area network (LAN), a wide area network (WAN), the Internet, or the like.

Here, the matching device 201 is a computer that performs matching between encrypted pieces of data. The matching device 201 is, for example, a server of a business operator (matching business operator) that provides a matching system.

The key management server 202 is a computer that includes a key storage database (DB) 220 and manages keys for encrypting data. The keys are generated in, for example, the client terminals C1 to Cn. The key management server 202 is, for example, a server of a trusted third party other than a party involved in matching (a user or the matching business operator).

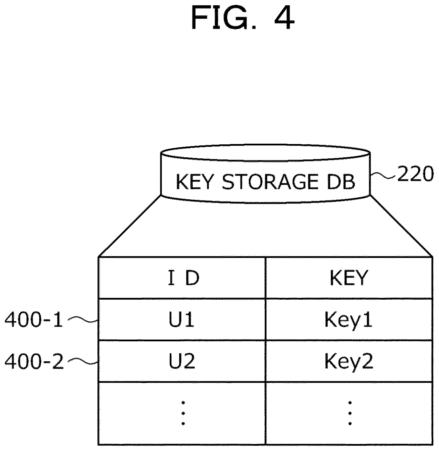

Note that content stored in the key storage DB 220 will be described later with reference to FIG. 4.

The client terminals C1 to Cn are computers that are used by users of the information processing system 200. The client terminals C1 to Cn are, for example, personal computers (PCs), tablet PCs, smartphones, or the like. Note that the first user 103 and the second user 104 illustrated in FIG. 1 correspond to, for example, the users of the information processing system 200.

In the following description, an optional client terminal among the client terminals C1 to Cn may be referred to as a "client terminal Ci" (i = 1, 2, ..., n).

(Hardware Configuration Example of Matching Device 201 or the like)

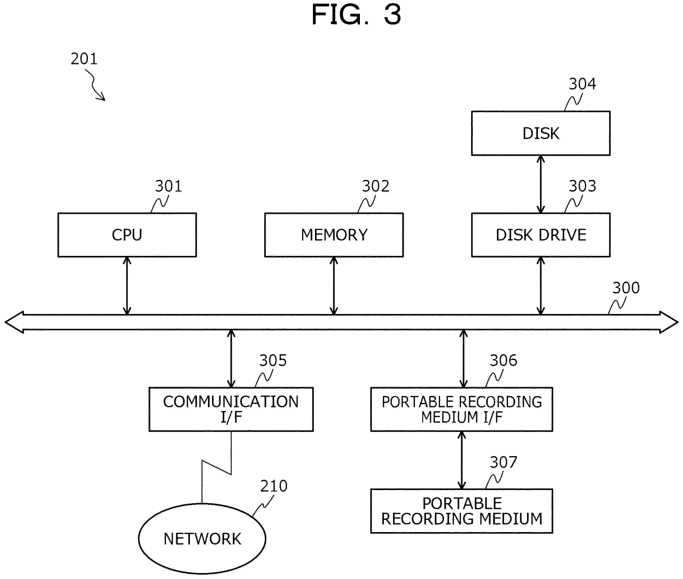

Next, a hardware configuration example of the matching device 201, the key management server 202, and the client terminal Ci will be described with reference to FIG. 3. Here, the matching device 201, the key management server 202, and the client terminal Ci are referred to as the "matching device 201 or the like".

FIG. 3 is a block diagram illustrating the hardware configuration example of the matching device 201 or the like. In FIG. 3, the matching device 201 or the like includes a central processing unit (CPU) 301, a memory 302, a disk drive 303, a disk 304, a communication interface (I/F) 305, a portable recording medium I/F 306, and a portable recording medium 307. Furthermore, the respective components are coupled to each other by a bus 300.

Here, the CPU 301 performs overall control of the matching device 201 or the like. The CPU 301 may include a plurality of cores. The memory 302 includes, for example, a read only memory (ROM), a random access memory (RAM), a flash ROM, and the like. Specifically, for example, the flash ROM stores OS programs, the ROM stores application programs, and the RAM is used as a work area for the CPU 301. The program stored in the memory 302 is loaded to the CPU 301 to cause the CPU 301 to execute coded processing.

The disk drive 303 controls reading and writing of data from and into the disk 304, under the control of the CPU 301. The disk 304 stores data written under the control of the disk drive 303. As the disk 304, for example, a magnetic disk, an optical disk, or the like is exemplified.

The communication I/F 305 is coupled to the network 210 via a communication line, and is coupled to an external computer through the network 210. Additionally, the communication I/F 305 manages an interface between the network 210 and the inside of the device, and controls input and output of data from an external computer. As the communication I/F 305, for example, a modem, a LAN adapter, or the like may be adopted.

The portable recording medium I/F 306 controls reading and writing of data from and into the portable recording medium 307, under the control of the CPU 301. The portable recording medium 307 stores data written under the control of the portable recording medium I/F 306. As the portable recording medium 307, for example, a compact disc (CD)-ROM, a digital versatile disk (DVD), a universal serial bus (USB) memory, or the like is exemplified.

Note that the matching device 201 or the like may include, for example, an input device, a display, or the like, as well as the components described above. Furthermore, the matching device 201 or the like does not have to include, for example, the portable recording medium I/F 306 and the portable recording medium 307 among the components described above.

(Content Stored in Key Storage DB 220)

Next, content stored in the key storage DB 220 included in the key management server 202 will be described. The key storage DB 220 is implemented by, for example, a storage device such as the memory 302 and the disk 304 of the key management server 202 illustrated in FIG. 3.

FIG. 4 is an explanatory diagram illustrating an example of the content stored in the key storage DB 220. In FIG. 4, the key storage DB 220 has fields for an ID and a key, and stores key management information (for example, key management information 400-1 and 400-2) as records by setting information in each field.

Here, the ID is an identifier that uniquely identifies a user. The key is a key corresponding to a user. The key is generated in the client terminal Ci and managed in the key management server 202. For example, the key management information 400-1 indicates a key Key1 of a user U1.

(Functional Configuration Example of Information Processing System 200)

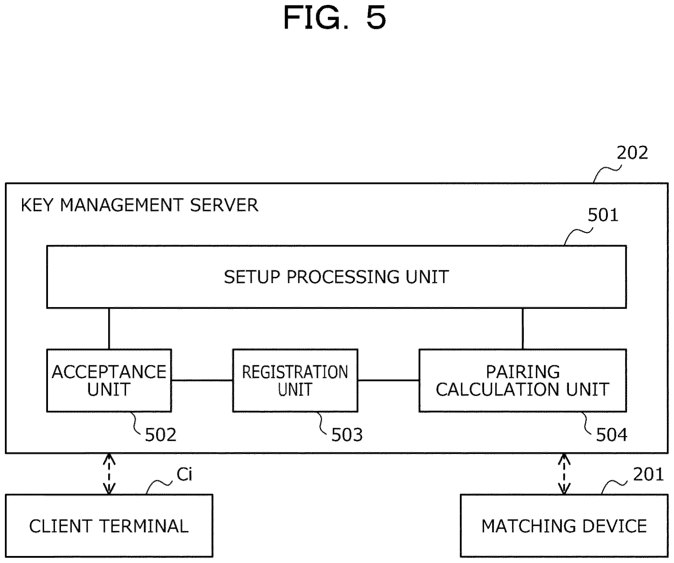

Next, a functional configuration example of the information processing system 200 will be described with reference to FIGs. 5 to 7. First, a functional configuration example of the key management server 202 will be described with reference to FIG. 5.

FIG. 5 is a block diagram illustrating the functional configuration example of the key management server 202. In FIG. 5, the key management server 202 includes a setup processing unit 501, an acceptance unit 502, a registration unit 503, and a pairing calculation unit 504. The setup processing unit 501 to the pairing calculation unit 504 have functions serving as a control unit, and specifically, for example, those functions are implemented by a program stored in a storage device such as the memory 302, the disk 304, or the portable recording medium 307 of the key management server 202 illustrated in FIG. 3 executed by the CPU 301 or by the communication I/F 305. A processing result of each functional unit is stored in, for example, a storage device such as the memory 302 or the disk 304 of the key management server 202.

The setup processing unit 501 sets information regarding generation of a key. The key is a key for encrypting data. Specifically, for example, the setup processing unit 501 sets a prime number p. Furthermore, the setup processing unit 501 sets a set U of domains and sets TABLE (dictionary-type correspondence TABLE).

Here, the domain is, for example, an attribute provided from a user, or a space and a range that an interest in an attribute may take. In the dictionary-type correspondence TABLE, an element of the set U of the domains is set as a key, and an element of a set $[p] = \{0, ..., p-1\}$ is set as a value. Note that, when this TABLE is identified with mapping, TABLE: $U \rightarrow [p]$ is designed to be injective mapping.

Furthermore, the setup processing unit 501 sets information regarding pairing calculation. Specifically, for example, the setup processing unit 501 sets a group G of prime number orders q and a group H of prime number orders p (q > p). Furthermore, the setup processing unit 501 sets pairing e. Here, the pairing e is a pairing function that performs calculation having a bi-homomorphism.

Here, it is assumed that the pairing e is "e: $G \times G \rightarrow H$". The pairing e: $G \times G \rightarrow H$ is mapping that satisfies $e(g_1 g_2, h_1) = e(g_1, h_1)e(g_2, h_1)$ and $e(g_1, h_1 h_2) = e(g_1, h_1)e(g_1, h_2)$ for optional $g_1, g_2 \in G$, $h_1, h_2 \in H$ (bi-homomorphism).

The setup processing unit 501 discloses the set U of the domains, the TABLE, and the group G of the prime number orders q to the entire information processing system 200.

The acceptance unit 502 accepts a key registration request from the client terminal Ci. Here, the key registration request is a request to register a key. The key registration request includes, for example, an ID and a key. The ID is an identifier that uniquely identifies a user. The key is a key generated in the client terminal Ci. Specifically, for example, by receiving the key registration request from the client terminal Ci, the received key registration request is accepted.

The registration unit 503 registers a key in association with a user. Specifically, for example, in a case where a key registration request is accepted, the registration unit 503 registers a key included in the key registration request in the key storage DB 220 illustrated in FIG. 4 in association with an ID included in the key registration request. Note that, in a case where a key corresponding to the ID included in the key registration request has already been registered, the registration unit 503 may overwrite the key with the key included in the key registration request.

Furthermore, the acceptance unit 502 accepts a pairing calculation request from the matching device 201. Here, the pairing calculation request is a request for a result of pairing calculation. The pairing calculation request includes, for example, a combination of IDs of two users to be paired (for example, U1 and U2).

The pairing calculation unit 504 performs pairing calculation. Specifically, for example, in a case where a pairing calculation request is accepted, the pairing calculation unit 504 acquires a key corresponding to each ID included in the pairing calculation request from the key storage DB 220. Next, the pairing calculation unit 504 inputs the acquired key corresponding to each ID to the pairing e and performs calculation, thereby acquiring a calculation result of the pairing e.

Then, the pairing calculation unit 504 transmits the calculation result of the pairing e to the matching device 201. At this time, the pairing calculation unit 504 transmits the pairing e to the matching device 201 together with the calculation result of the pairing e. Note that the pairing e may have been shared in advance with a pairing business operator (matching device 201).

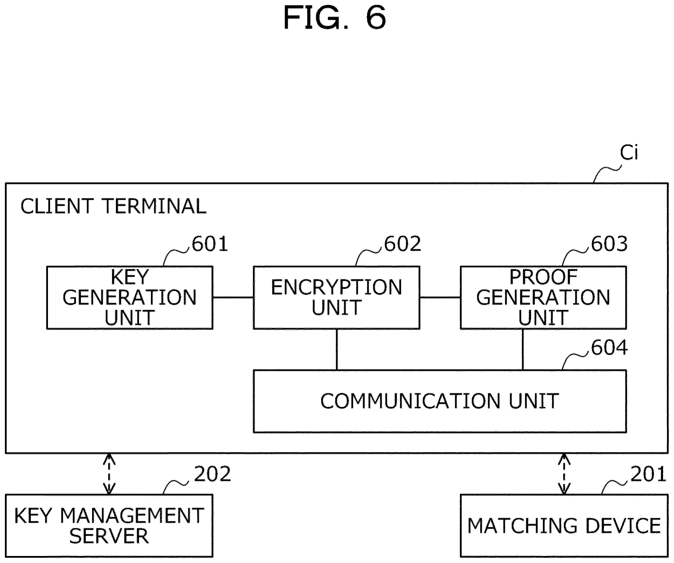

Next, a functional configuration example of the client terminal Ci will be described with reference to FIG. 6.

FIG. 6 is a block diagram illustrating the functional configuration example of the client terminal Ci. In FIG. 6, the client terminal Ci includes a key generation unit 601, an encryption unit 602, a proof generation unit 603, and a communication unit 604. The key generation unit 601 to the communication unit 604 have functions serving as the control unit, and specifically, for example, those functions are implemented by a program stored in a storage device such as the memory 302, the disk 304, or the portable recording medium 307 of the client terminal Ci illustrated in FIG. 3 executed by the CPU 301 or by the communication I/F 305. A processing result of each functional unit is stored in, for example, a storage device such as the memory 302 or the disk 304 of the client terminal Ci.

The key generation unit 601 generates a key.

Specifically, for example, the key generation unit 601 generates a key by selecting one element of the group G of the prime number orders q disclosed by the key management server 202. Then, the key generation unit 601 transmits a key registration request including an ID corresponding to the own terminal and the generated key to the key management server 202. The ID corresponding to the own terminal is an ID of a user who uses the client terminal Ci.

As a result, the user of the client terminal Ci may generate his/her own key and upload (register) the key to the key management server 202.

The encryption unit 602 encrypts data to be matched using a generated key. The data to be matched is, for example, attribute information or requirement information. The attribute information is information indicating an attribute of a user. The attribute of the user is, for example, age, an educational background, a work history, gender, an achievement, or the like.

The requirement information is information indicating a condition for an attribute of another user requested by a user. The condition for the attribute of the another user corresponds to an interest in the attribute of the another user. Examples of the condition for the attribute of the another user include an employment condition (age, an educational background, a work history, gender, an achievement, or the like) requested by a company (user) to a job applicant (another user).

In the following description, among pieces of data to be matched, one piece of data may be referred to as "attribute information m" and the other piece of data may be referred to as "requirement information n". Furthermore, a key of a user who provides the attribute information m (attribute information provider) may be referred to as "g", and a key of a user who provides the requirement information n (requirement information provider) may be referred to as "h".

Specifically, for example, the encryption unit 602 encrypts the attribute information m by indexing using the key g. More specifically, for example, the encryption unit 602 creates an attribute value m by encoding the attribute information m using the TABLE disclosed by the key management server 202. Then, the encryption unit 602 generates encrypted data m' by calculating the m-th power of the key g. For the encrypted data m', "m' = $g^m$" holds.

Furthermore, the encryption unit 602 encrypts the requirement information n by indexing using the key h. More specifically, for example, the encryption unit 602 creates a requirement value n by encoding the requirement information n using the TABLE disclosed by the key management server 202. Then, the encryption unit 602 generates encrypted data n' by calculating the (1/n)-th power of the key h. For the encrypted data n', "n' = $h^{1/n}$" holds.

Here, encryption by conversion of m -> $g^m$ and conversion of n -> $h^{1/n}$ will be described. This m → $g^m$ means that, when the plain text m encoded into numbers is encrypted, a finite cyclic group G and a generation source g thereof are fixed, and m is converted into m' = $g^m$. As a conversion example, a method of fixing a (large) prime number p and an integer $g \in \{1, ..., p-1\}$, encoding a message as $m \in \{0, ..., p-1\}$, and then converting m into m' = $g^m$(mod p) is exemplified.

As the reason why this conversion is encryption, it is exemplified that it is difficult to derive the original plain text m even when g and m' are disclosed since it is well known that it is difficult to efficiently calculate "m" from information "g and m'" when the plain text m is converted into m' = $g^m$. Furthermore, this conversion is simplified compared to hashing with the conventional Relational Hash while satisfying a nature of the encryption. This simplification works to enable generation of a ZKP of an electronic signature σ described later.

The proof generation unit 603 generates proof information in a case where the electronic signature σ is added to data to be matched. Here, the electronic signature σ is information capable of verifying authenticity of the data by a public key pk of a signer. The electronic signature σ is issued by a trusted third party. For example, in a case where the attribute information m indicates a "name of a graduated university", the electronic signature σ is issued by the graduated university.

The electronic signature σ is added to, for example, the attribute information m. In the following description, a case is assumed where the electronic signature σ is added to the attribute information m.

The proof information is information for proving that the electronic signature σ is information capable of verifying authenticity of the original data (attribute information m that is the original plain text) of the encrypted data m'. Specifically, for example, the proof information includes zero-knowledge proof text Π for proving that the electronic signature σ is information capable of verifying the authenticity of the original data of the encrypted data m' using the public key pk of the signer.

The zero-knowledge proof text Π indicates that "σ is the signature of the original plain text of m' verifiable with pk" when the electronic signature σ verifiable with the public key pk of the third party is given to the original attribute value m (attribute information m) when the attribute value m is encrypted to m'. More specifically, the zero-knowledge proof text Π is information for giving a zero-knowledge proof of knowledge of "m' = g^m holds and m is such that σ is the signature verifiable with the public key pk for m".

The zero-knowledge proof text Π does not disclose the attribute information m, but discloses m' = g^m, σ, and pk, and makes it possible to prove that "m'= g^m holds and σ is the signature of m verifiable with the public key pk for m". Note that a method of generating the zero-knowledge proof text Π may vary depending on, for example, a signature format.

In the following description, the zero-knowledge proof text Π may be referred to as a "zero-knowledge proof (ZKP) of the electronic signature σ".

The communication unit 604 transmits a matching request including encrypted data to the matching device 201. Here, the matching request is to request matching using the encrypted data. The encrypted data is obtained by encrypting data to be matched.

For example, it is assumed that the data to be matched is the "attribute information m" and the electronic signature σ is added to the attribute information m. In this case, the communication unit 604 transmits a matching request including the encrypted data m', the public key pk, the electronic signature σ, and the zero-knowledge proof text Π (ZKP of the electronic signature σ) to the matching device 201. Note that, for example, the matching device 201 may acquire the public key pk from the signer of the electronic signature σ.

Furthermore, it is assumed that the data to be matched is the "requirement information n". In this case, the communication unit 604 transmits a matching request including the encrypted data n' to the matching device 201.

Furthermore, the communication unit 604 may receive a matching result from the matching device 201. The matching result is a response to the matching request. The matching result may be, for example, information indicating matching success or matching failure. Furthermore, in the case of matching success, the matching result may include information for specifying a matching partner.

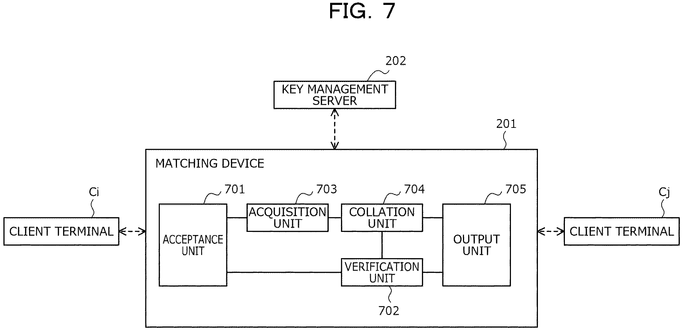

Next, a functional configuration example of the matching device 201 will be described with reference to FIG. 7.

FIG. 7 is a block diagram illustrating the functional configuration example of the matching device 201. In FIG. 7, the matching device 201 includes an acceptance unit 701, a verification unit 702, an acquisition unit 703, a collation unit 704, and an output unit 705. The acceptance unit 701 to the output unit 705 have functions serving as the control unit, and specifically, for example, those functions are implemented by a program stored in a storage device such as the memory 302, the disk 304, or the portable recording medium 307 of the matching device 201 illustrated in FIG. 3 executed by the CPU 301 or by the communication I/F 305. A processing result of each functional unit is stored in, for example, a storage device such as the memory 302 or the disk 304 of the matching device 201.

In the following description, a client terminal used by a user who provides the attribute information m (attribute information provider) may be referred to as the "client terminal Ci". Furthermore, a client terminal used by a user who provides the requirement information n (requirement information provider) may be referred to as a "client terminal Cj" ($j \neq i$, j = 1, 2, ..., n).

The acceptance unit 701 accepts a first matching request from the client terminal Ci. Specifically, for example, by receiving the first matching request from the client terminal Ci, the acceptance unit 701 accepts the received first matching request. Here, the first matching request includes, for example, the encrypted data m', the public key pk, the electronic signature $\sigma$, and the zero-knowledge proof text $\Pi$ (ZKP of the electronic signature $\sigma$).

The encrypted data m' is information obtained by encrypting the attribute information m (first data) to be matched by indexing using the key g (first key) of the user (attribute information provider), and "m' = $g^m$" holds. The public key pk is a public key of a signer of the electronic signature $\sigma$. Note that the matching device 201 may directly acquire the public key pk from the signer of the electronic signature $\sigma$.

The electronic signature $\sigma$ is a signature added to the attribute information m, and is information capable of verifying authenticity of the attribute information m using the public key pk. The zero-knowledge proof text $\Pi$ is a ZKP of the electronic signature $\sigma$, and is proof information for proving that the electronic signature $\sigma$ is information capable of verifying authenticity of the original data (attribute information m that is the original plain text) of the encrypted data m'.

Furthermore, the acceptance unit 701 accepts a second matching request from the client terminal Cj. Specifically, for example, by receiving the second matching request from the client terminal Cj, the acceptance unit 701 accepts the received second matching request.

Here, the second matching request includes, for example, the encrypted data n'. The encrypted data n' is information obtained by encrypting the requirement information n (second data) to be matched by indexing using the key h (second key) of the user (requirement information provider), and "n' = $h^{1/n}$" holds.

The verification unit 702 verifies validity of the electronic signature $\sigma$ using proof information included in a first matching request in a case where the electronic signature $\sigma$ is included in the first matching request. Specifically, for example, the verification unit 702 verifies the validity of the electronic signature $\sigma$ by proving the zero-knowledge proof text $\Pi$ (ZKP of the electronic signature $\sigma$) using the public key pk, the electronic signature $\sigma$, and the encrypted data m'.

In a case where the validity of the electronic signature $\sigma$ is verified using the zero-knowledge proof text $\Pi$, it may be said that authenticity of the encrypted data m' is secured, and eventually, authenticity of the original data (attribute information m) of the encrypted data m' is secured. Note that a method of proving the zero-knowledge proof text $\Pi$ using pk, $\sigma$, and m' may vary depending on a signature format.

The acquisition unit 703 acquires, from the key management server 202, a first calculation result calculated from the key g (first key) and the key h (second key) using a predetermined function. Here, the predetermined function is, for example, a pairing function (pairing e) that performs calculation having a bi-homomorphism.

Specifically, for example, in a case where a first matching request and a second matching request are accepted, the acquisition unit 703 transmits a pairing calculation request to the key management server 202. The pairing calculation request includes an ID of a user (attribute information provider) and an ID of a user (requirement information provider).

Then, the acquisition unit 703 acquires a calculation result e(g, h) by receiving the pairing e and the calculation result e(g, h) from the key management server 202. The calculation result e(g, h) is a calculation result (first calculation result) of the pairing e obtained by inputting the keys g and h to the pairing e. The key g is a key corresponding to the ID of the user (attribute information provider). The key h is a key corresponding to the ID of the user (requirement information provider). Note that the acquisition unit 703 may acquire the pairing e from the key management server 202 in advance.

The collation unit 704 collates, in a case where validity of the electronic signature $\sigma$ is verified using proof information, an acquired first calculation result with a second calculation result calculated from the encrypted data m' and the encrypted data n' using a predetermined function. The predetermined function is, for example, a pairing function (pairing e) provided from the key management server 202.

Specifically, for example, the collation unit 704 calculates a calculation result e($g^m$, $h^{1/n}$) by inputting the encrypted data m' and n' to the pairing e. The calculation result e($g^m$, $h^{1/n}$) corresponds to the second calculation result. Then, the collation unit 704 collates the calculation result e(g, h) with the calculation result e($g^m$, $h^{1/n}$).

Here, in a case where the calculation result e(g, h) and the calculation result e($g^m$, $h^{1/n}$) match, it may be said that the attribute information m and the requirement information n are equal. This collation is implemented by enabling matching determination of the original message converted by "m $\to$ $g^m$" by pairing mapping using the bi-homomorphism of the pairing e. Specifically, whether the attribute information m and the requirement information n are equal may be confirmed using the fact that the calculation result of the pairing e is "e($g^m$, $h^{1/n}$) = e(g, h)$^{m/n}$" by setting one conversion as "m $\to$ $g^m$" and the other conversion as "n $\to$ $h^{1/n}$".

The output unit 705 outputs a collation result obtained by collation. Examples of an output format of the output unit 705 include storage in a storage device such as the memory 302 or the disk 304 of the matching device 201, transmission to another computer (for example, the client terminals Ci and Cj) by the communication I/F 305, display on a display (not illustrated), print output to a printer (not illustrated), and the like.

Specifically, for example, in a case where the collation result is "match", the output unit 705 may transmit a matching result indicating matching success to the client terminals Ci and Cj. This matching result may include, for example, information for specifying the users of the client terminals Ci and Cj. Furthermore, in a case where the collation result is "mismatch", the output unit 705 may transmit a matching result indicating matching failure to the client terminals Ci and Cj.

Furthermore, in a case where validity of the electronic signature $\sigma$ has not been verified, the output unit 705 may output a verification result indicating that verification of authenticity of the encrypted data m' has failed. Specifically, for example, the output unit 705 transmits a matching result including the verification result indicating that the verification of the authenticity of the encrypted data m' has failed to the client terminal Ci. In this case, the output unit 705 may transmit a matching result indicating matching failure to the client terminal Cj.

Note that the acquisition unit 703 may acquire the first calculation result from the key management server 202 in a case where the validity of the electronic signature $\sigma$ is verified using the proof information. As a result, it is possible to prevent the first calculation result from being acquired from the key management server 202 even though the validity of the electronic signature $\sigma$ is not verified and the first calculation result and the second calculation result are not collated.

Furthermore, the collation unit 704 may collate the first calculation result with the second calculation result regardless of the verification result of the validity of the electronic signature $\sigma$ using the proof information. In this case, the output unit 705 may output a collation result between the first calculation result and the second calculation result together with the verification result of the validity of the electronic signature $\sigma$.

(Example of Matching Processing of Matching Device 201)

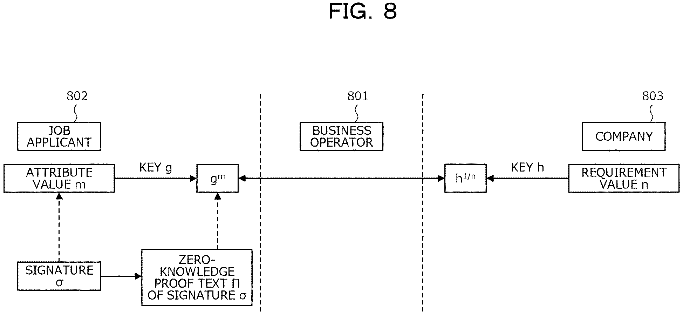

Here, an example of matching processing of the matching device 201 will be described with reference to FIG. 8.

FIG. 8 is an explanatory diagram illustrating an example of the matching processing of the matching device 201. In FIG. 8, a business operator 801 represents a matching business operator, and corresponds to the matching device 201. A job applicant 802 represents a user who provides the attribute information m (attribute information provider), and corresponds to the client terminal Ci. A company 803 represents a user who provides the requirement information n (requirement information provider), and corresponds to the client terminal Cj. Note that, in FIG. 8, the electronic signature $\sigma$ is referred to as the "signature $\sigma$".

The business operator 801 (matching device 201) accepts $g^m$ and the zero-knowledge proof text $\Pi$ from the job applicant 802 (client terminal Ci). The encrypted data m' obtained by encrypting the attribute value m (attribute information m) using the key g of the job applicant 802 is represented by $g^m$. The zero-knowledge proof text $\Pi$ is a ZKP of the electronic signature $\sigma$. The electronic signature $\sigma$ is valid for the attribute value m (attribute information m). The zero-knowledge proof text $\Pi$ is valid for $g^m$.

Furthermore, the business operator 801 (matching device 201) accepts $h^{1/n}$ from the company 803 (client terminal Cj). The encrypted data n' obtained by encrypting the requirement value n (requirement information n) using the key h of the company 803 is represented by $h^{1/n}$. The requirement information n represents a recruitment requirement.

The business operator 801 (matching device 201) verifies validity of the electronic signature $\sigma$ using the zero-knowledge proof text $\Pi$. In a case where the validity of the electronic signature $\sigma$ is verified using the zero-knowledge proof text $\Pi$, authenticity of $g^m$ (encrypted data m') is secured, and eventually, authenticity of the original data (attribute value m) of $g^m$ is secured.

Note that it is also conceivable to generate the ZKP of the signature for the existing Relational Hash. However, since a hash function is complicated, it is not possible to directly apply a conventionally known technology of generating a zero-knowledge proof. More specifically, since it is difficult to write a hash function used in the Relational Hash with an arithmetic circuit independent of input, an existing framework of ZK-SNARKs may not be applied when a zero-knowledge proof is generated. Therefore, when the attribute information m is concealed, an approach of simplifying the encrypted data using encryption by indexing in a form such as "$m \rightarrow g^m$" is effective.

In a case where the validity of the electronic signature $\sigma$ is verified using the zero-knowledge proof text $\Pi$, the business operator 801 (matching device 201) performs matching using the bi-homomorphism of the pairing e without using the keys g and h. Specifically, for example, the business operator 801 (matching device 201) determines whether or not "$e(g^m, h^{1/n}) = e(g, h)^{m/n}$" matches "$e(g, h)$". The first calculation result of the pairing e obtained from the key management server 202 is represented by $e(g, h)$. The second calculation result obtained by inputting $g^m$ and $h^{1/n}$ to the pairing e is represented by $e(g^m, h^{1/n})$.

As a result, by applying the concept of the pairing mapping, the business operator 801 (matching device 201) may determine whether or not the attribute value m (attribute information m) and the requirement value n (requirement information n) match without decoding the attribute information m and the requirement information n.

(Operation Example of Information Processing System 200)

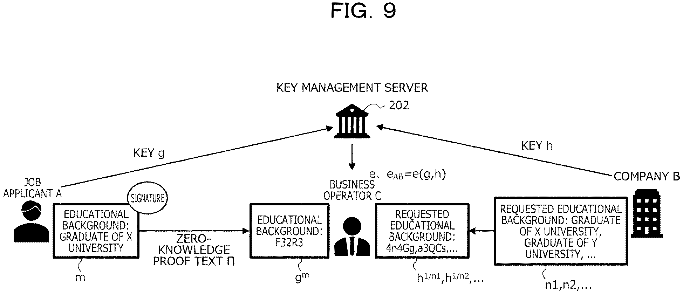

Next, an operation example of the information processing system 200 according to the first embodiment will be described with reference to FIG. 9. Here, a case where a business operator C performs matching between a job applicant A and a company B in recruitment matching will be described as an example.

FIG. 9 is an explanatory diagram illustrating the operation example of the information processing system 200 according to the first embodiment. In FIG. 9, the business operator C represents a matching business operator, and corresponds to the matching device 201. The job applicant A represents a user (attribute information provider), and corresponds to the client terminal Ci. The company B represents a user (requirement information provider), and corresponds to the client terminal Cj. Note that, in FIG. 9, the electronic signature $\sigma$ is referred to as the "signature".

First, the job applicant A (client terminal Ci) generates the key g, and registers the key g in the key management server 202. Furthermore, the company B (client terminal Cj) generates the key h, and registers the key h in the key management server 202. The keys g and h are not disclosed to other than the key management server 202. The key management server 202 prepares pairing mapping.

The job applicant A (client terminal Ci) converts the attribute information m into $g^m$ using the key g, and transmits $g^m$ to the business operator C (matching device 201). It is possible to regard $g^m$ as ciphertext of the attribute information m. Here, a case is assumed where the attribute information m is "educational background: graduate of X university (= m)", and the attribute information m is converted into encrypted data of "educational background: F32R3 (= $g^m$)".

Moreover, in a case where the electronic signature $\sigma$ by a third party (X university) is added to the attribute information m, the job applicant A (client terminal Ci) generates the zero-knowledge proof text $\Pi$ indicating that the electronic signature $\sigma$ is valid for the plain text m of the encrypted data $g^m$, and transmits the zero-knowledge proof text $\Pi$ to the business operator C (matching device 201). As a result, the job applicant A (client terminal Ci) guarantees authenticity of the encrypted data $g^m$ submitted to the business operator C.

On the other hand, the company B (client terminal Cj) converts the requirement information n into $h^{1/n}$ using the key h, and transmits $h^{1/n}$ to the business operator C (matching device 201). It is possible to regard $h^{1/n}$ as ciphertext of the requirement information n. Unlike the job applicant side, the company side may easily perform subsequent matching determination by pairing by taking reciprocal power at the time of encryption using the key h.

Here, a case is assumed where the requirement information n is "requested educational background: graduate of X university, graduate of Y university, ... (= n1, n2, ...)" and the requirement information n is converted into encrypted data of "requested educational background: 4n4Gg, a3QCs, ... (= $h^{1/n1}$, $h^{1/n2}$, ...)".

The business operator C (matching device 201) accepts the encrypted data $g^m$ and the zero-knowledge proof text $\Pi$ from the job applicant A (client terminal Ci). Furthermore, the business operator C (matching device 201) accepts the encrypted data $h^{1/n}$ from the company B (client terminal Cj). As a result, the encrypted data $g^m$ of the attribute information m and the zero-knowledge proof text $\Pi$ regarding validity of the electronic signature $\sigma$ added to the attribute information m are given from the job applicant A to the business operator C. Furthermore, the encrypted data $h^{1/n}$ of the requirement information n is given from the company B to the business operator C.

The business operator C (matching device 201) receives, from the key management server 202, not the keys g and h of the job applicant A and the company B, but various types of information regarding pairing calculation (pairing e, calculation result $e_{AB} = (g, h)$). Then, in a case where the validity of the electronic signature $\sigma$ is verified using the zero-knowledge proof text $\Pi$, the business operator C (matching device 201) performs matching using the bi-homomorphism of the pairing e without decoding the plain text from the encrypted data $g^m$ and $h^{1/n}$.

Here, the business operator C (matching device 201) determines whether $e_{AB}$ matches e("F32R3", "4n4Gg"), e("F32R3", "a3QCs"), ..., and determines that the requirement is matched (matching success) when an equal sign is established.

Note that e("F32R3", "4n4Gg") is a calculation result obtained by inputting "F32R3 (= $g^m$)" and "4n4Gg (= $h^{1/n1}$)" to the pairing e. Furthermore, e("F32R3", "a3QCs") is a calculation result obtained by inputting "F32R3 (= $g^m$)" and "a3QCs (= $h^{1/n2}$)" to the pairing e.

As described above, according to the information processing system 200, matching in which privacy is protected may be performed by encrypting data (m, n) to be matched and determining whether original data is equal without decoding the ciphertext. Furthermore, according to the information processing system 200, by verifying the zero-knowledge proof text $\Pi$, the authenticity of the attribute information m submitted by the job applicant A may be verified without decoding the plain text from the ciphertext. Note that the requirement information n indicates an interest in an attribute of the company B, and authenticity thereof does not have to be secured. Thus, no signature is added to the requirement information n.

(Various Processing Procedures of Information Processing System 200)

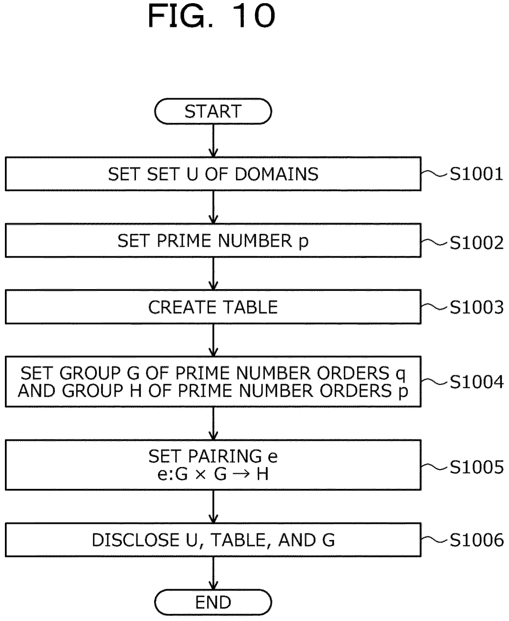

Next, various processing procedures of the information processing system 200 will be described with reference to FIGs. 10 to 17.

• Setup Processing Procedure of Key Management Server 202

First, a setup processing procedure of the key management server 202 will be described.

FIG. 10 is a flowchart illustrating an example of the setup processing procedure of the key management server 202. In the flowchart of FIG. 10, first, the key management server 202 sets the set U of the domains (step S1001). Next, the key management server 202 sets the prime number p (step S1002).

Then, the key management server 202 creates the TABLE in which an element of the set U of the domains is set as a key, and an element of the set [p] = {0, ..., p-1} is set as a value (step S1003). Next, the key management server 202 sets the group G of the prime number orders q and the group H of the prime number orders p (q > p) (step S1004).

Next, the key management server 202 sets the pairing e "e: $G \times G \rightarrow H$" (step S1005). Then, the key management server 202 discloses the set U of the domains, the TABLE, and the group G of the prime number orders q to the entire information processing system 200 (step S1006), and ends a series of processing according to this flowchart.

As a result, the key management server 202 may prepare information regarding key generation and information regarding pairing calculation.

• Key Generation/Update Processing Procedure of Client Terminal Ci

Next, a key generation/update processing procedure of the client terminal Ci will be described.

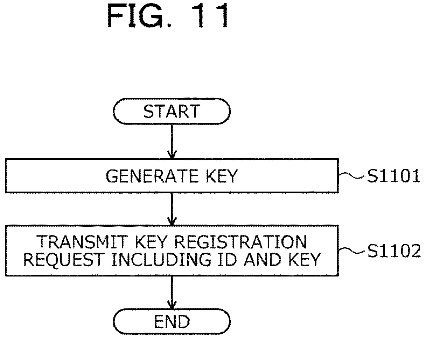

FIG. 11 is a flowchart illustrating an example of the key generation/update processing procedure of the client terminal Ci. In the flowchart of FIG. 11, first, the client terminal Ci generates a key by selecting one element of the group G of the prime number orders q disclosed by the key management server 202 (step S1101) .

Then, the client terminal Ci transmits a key registration request including an ID corresponding to the own terminal and the generated key to the key management server 202 (step S1102), and ends a series of processing according to this flowchart.

As a result, the client terminal Ci may generate a key of a user of the own terminal, and upload (register) the key to the key management server 202.

• Key Registration Processing Procedure of Key Management Server 202

Next, a key registration processing procedure of the key management server 202 will be described.

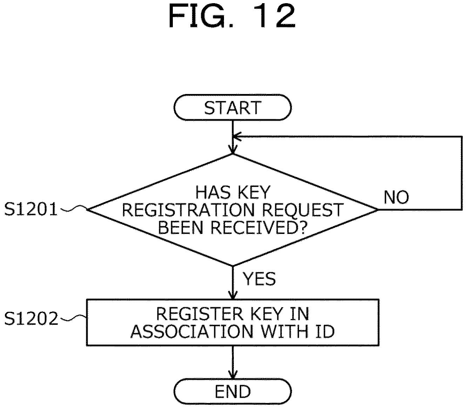

FIG. 12 is a flowchart illustrating an example of the key registration processing procedure of the key management server 202. In the flowchart of FIG. 12, first, the key management server 202 determines whether or not the key registration request has been received from the client terminal Ci (step S1201). Here, the key management server 202 stands by for reception of the key registration request from the client terminal Ci (step S1201: No).

Then, in a case where the key registration request has been received from the client terminal Ci (step S1201: Yes), the key management server 202 registers the key included in the key registration request in the key storage DB 220 in association with the ID included in the key registration request (step S1202), and ends a series of processing according to this flowchart.

As a result, the key management server 202 may register and manage the key of each user generated in the client terminal Ci in the key storage DB 220. Note that, in a case where a key corresponding to the ID included in the key registration request has already been registered in step S1202, the key management server 202 overwrites the key with the key included in the key registration request.

Next, a matching processing procedure of the information processing system 200 will be described. Note that it is assumed that a client terminal of a user (attribute information provider) is the "client terminal Ci", and a client terminal of a user (requirement information provider) is "client terminal Cj".

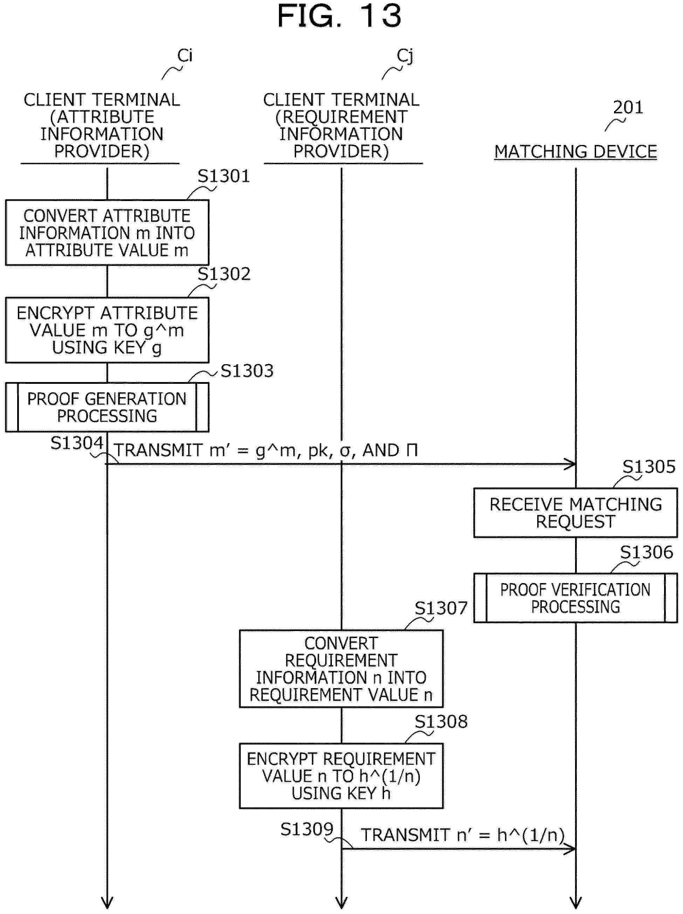

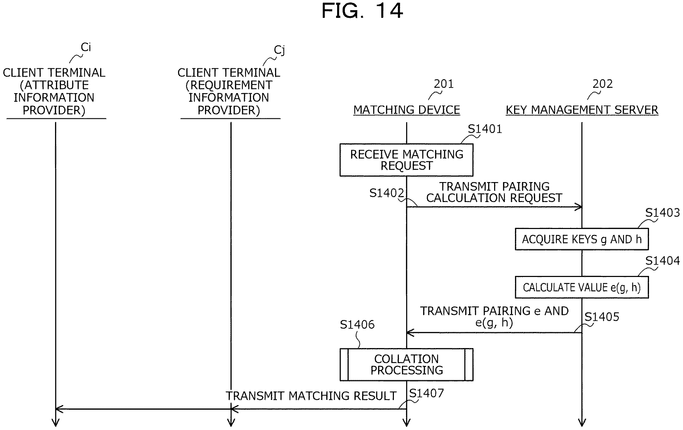

FIGs. 13 and 14 are sequence diagrams illustrating the matching processing procedure of the information processing system 200. In the sequence diagram of FIG. 13, first, the client terminal Ci encodes attribute information m using the TABLE disclosed by the key management server 202 to convert the attribute information m into the attribute value m (step S1301).

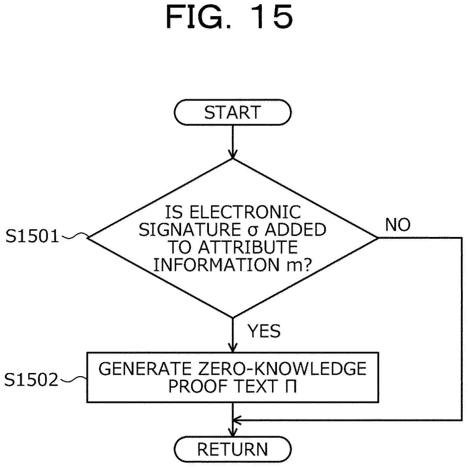

Then, the client terminal Ci encrypts the attribute value m to $g^m$ using the key g to generate the encrypted data m' ($m' = g^m$) (step S1302) . Next, the client terminal Ci executes proof generation processing (step S1303). Note that a specific processing procedure of the proof generation processing will be described later with reference to FIG. 15.

Here, a case is assumed where the zero-knowledge proof text $\Pi$ of the electronic signature $\sigma$ added to the attribute information m (attribute value m) is generated. Then, the client terminal Ci transmits a matching request including the encrypted data m', the public key pk, the electronic signature $\sigma$, and the zero-knowledge proof text $\Pi$ to the matching device 201 (step S1304) .

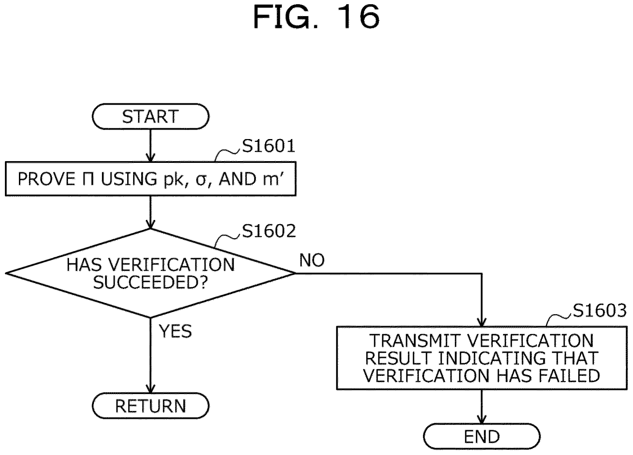

When the matching request is received from the client terminal Ci (step S1305), the matching device 201 executes proof verification processing for the zero-knowledge proof text $\Pi$ included in the matching request (step S1306). Note that a specific processing procedure of the proof verification processing will be described later with reference to FIG. 16.

The client terminal Cj encodes the requirement information n using the TABLE disclosed by the key management server 202 to convert the requirement information n into the requirement value n (step S1307). Next, the client terminal Cj encrypts the requirement value n to $h^{1/n}$ using the key h to generate the encrypted data n' ($n' = h^{1/n}$) (step S1308) .

Then, the client terminal Cj transmits a matching request including the encrypted data n' to the matching device 201 (step S1309). Note that the processing of steps S1307 to S1309 may be executed before the processing of steps S1301 to S1304, or may be executed in parallel with the processing of steps S1301 to S1304.

In the sequence diagram of FIG. 14, first, when the matching request is received from the client terminal Cj (step S1401), the matching device 201 transmits a pairing calculation request to the key management server 202 (step S1402). The pairing calculation request includes an ID of the user (attribute information provider) of the client terminal Ci and an ID of the user (requirement information provider) of the client terminal Cj.

When the pairing calculation request is received from the matching device 201, the key management server 202 acquires the keys g and h corresponding to the respective IDs included in the pairing calculation request from the key storage DB 220 (step S1403). Next, the key management server 202 inputs the acquired keys g and h to the pairing e to calculate the calculation result e(g, h) of the pairing e (step S1404).

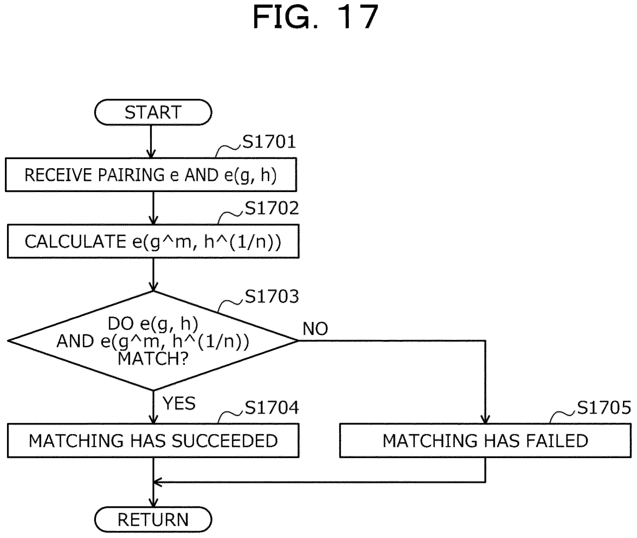

Then, the key management server 202 transmits the pairing e and the calculation result e(g, h) of the pairing e to the matching device 201 (step S1405). When the pairing e and the calculation result e(g, h) of the pairing e are received, the matching device 201 executes collation processing (step S1406). Note that a specific processing procedure of the collation processing will be described later with reference to FIG. 17.

Then, the matching device 201 transmits a matching result corresponding to a collation result to the client terminals Ci and Cj (step S1407), and ends a series of processing according to this sequence diagram.

Next, the specific processing procedure of the proof generation processing of the client terminal Ci in step S1303 indicated in FIG. 13 will be described with reference to FIG. 15.

FIG. 15 is a flowchart illustrating an example of the specific processing procedure of the proof generation processing of the client terminal Ci. In the flowchart of FIG. 15, first, the client terminal Ci determines whether or not the electronic signature $\sigma$ is added to the attribute information m (step S1501).

Here, in a case where the electronic signature $\sigma$ is not added to the attribute information m (step S1501: No), the client terminal Ci returns to the step in which the proof generation processing has been called. On the other hand, in a case where the electronic signature $\sigma$ is added to the attribute information m (step S1501: Yes), the client terminal Ci generates the zero-knowledge proof text $\Pi$ of the electronic signature $\sigma$ (step S1502), and returns to the step in which the proof generation processing has been called.

As a result, the client terminal Ci may generate the proof information for proving that the electronic signature $\sigma$ is information capable of verifying authenticity of the original data of the encrypted data m' using the public key pk of the signer.

Next, the specific processing procedure of the proof verification processing of the matching device 201 in step S1306 indicated in FIG. 13 will be described with reference to FIG. 16.

FIG. 16 is a flowchart illustrating an example of the specific processing procedure of the proof verification processing of the matching device 201. In the flowchart of FIG. 16, first, the matching device 201 verifies validity of the electronic signature $\sigma$ by proving the zero-knowledge proof text $\Pi$ (ZKP of the electronic signature $\sigma$) using the public key pk, the electronic signature $\sigma$, and the encrypted data m' (step S1601).

Then, the matching device 201 determines whether or not the verification of the validity of the electronic signature $\sigma$ has succeeded (step S1602). Here, in a case where the verification of the validity of the electronic signature $\sigma$ has succeeded (step S1602: Yes), the matching device 201 returns to the step in which the proof verification processing has been called.

On the other hand, in a case where the verification of the validity of the electronic signature $\sigma$ has failed (step S1602: No), the matching device 201 transmits a verification result indicating that verification of authenticity of the encrypted data m' has failed to the client terminal Ci (step S1603), and ends a series of processing according to this flowchart.

As a result, by verifying the validity of the electronic signature $\sigma$ using the zero-knowledge proof text $\Pi$, the matching device 201 may secure the authenticity of $g^m$ (encrypted data m'), and eventually secure the authenticity of the original data (attribute information m) of $g^m$.

Next, the specific processing procedure of the collation processing of the matching device 201 in step S1406 indicated in FIG. 14 will be described with reference to FIG. 17.

FIG. 17 is a flowchart illustrating an example of the specific processing procedure of the collation processing of the matching device 201. In the flowchart of FIG. 17, first, when the pairing e and the calculation result e(g, h) of the pairing e are received from the key management server 202 (step S1701), the matching device 201 calculates the calculation result $e(g^m, h^{1/n})$ from the encrypted data m' and n' using the pairing e (step S1702).

Next, the matching device 201 determines whether or not the calculation result e(g, h) received from the key management server 202 and the calculated calculation result $e(g^m, h^{1/n})$ match using the bi-homomorphism of the pairing e (step S1703).

Here, in a case where the calculation result e(g, h) and the calculation result $e(g^m, h^{1/n})$ match (step S1703: Yes), the matching device 201 determines that matching has succeeded (step S1704), and returns to the step in which the collation processing has been called.

On the other hand, in a case where the calculation result e(g, h) and the calculation result $e(g^m, h^{1/n})$ do not match (step S1703: No), the matching device 201 determines that matching has failed (step S1705), and returns to the step in which the collation processing has been called.

As a result, the matching device 201 may confirm whether the attribute information m and the requirement information n are equal using the bi-homomorphism of the pairing e.

As described above, according to the matching device 201 according to the first embodiment, the encrypted data m' (first encrypted data) obtained by encrypting the attribute information m (first data) by indexing using the key g (first key), the electronic signature σ added to the attribute information m, and the proof information may be accepted. The proof information is information for proving that the electronic signature σ is information capable of verifying authenticity of the original data (original plain text) of the encrypted data m'. Then, according to the matching device 201, validity of the electronic signature σ may be verified using the proof information. Furthermore, according to the matching device 201, the encrypted data n' (second encrypted data) obtained by encrypting the requirement information n (second data) by indexing using the key h (second key) may be accepted. Furthermore, according to the matching device 201, the calculation result $e(g, h)$ calculated from the key g and the key h using the pairing e may be acquired from the key management server 202. The pairing e is a pairing function that performs calculation having a bi-homomorphism. Then, according to the matching device 201, the acquired calculation result $e(g, h)$ and the calculation result $(g^m, h^{1/n})$ calculated from the encrypted data m' and the encrypted data n' using the pairing e may be collated.

As a result, the matching device 201 may secure authenticity of data regarding users to be matched (attribute information provider and requirement information provider) from a third party (matching business operator) while concealing content of the data. For example, by using encryption by indexing in the form such as "m $\rightarrow g^m$" when the attribute information m is concealed, the encrypted data m' may be simplified to generate the proof information, and the authenticity of the attribute information m added with the signature may be secured. Furthermore, by using the encryption by indexing and the bi-homomorphism of the pairing e, matching between users may be performed while concealing content of the attribute information m and the requirement information n regarding each user from a third party. For example, in recruitment matching, matching between a job applicant (individual) and a company (corporation) may be performed by collating an attribute (age, educational background, or the like) of the job applicant with an interest in an attribute (age, educational background, or the like) of the company.

Furthermore, according to the matching device 201, in a case where the validity of the electronic signature σ is verified, the calculation result $e(g, h)$ and the calculation result $(g^m, h^{1/n})$ may be collated.

As a result, in a case where the authenticity of the attribute information m is secured, the matching device 201 may collate the calculation result $e(g, h)$ with the calculation result $(g^m, h^{1/n})$ to perform matching between the users.

Furthermore, according to the matching device 201, the zero-knowledge proof text Π (ZKP of the electronic signature σ) for proving that the electronic signature σ is information capable of verifying authenticity of the original data of the encrypted data m' using the public key pk of the signer may be accepted as the proof information. Then, according to the matching device 201, the validity of the electronic signature σ may be verified by proving the zero-knowledge proof text Π using the public key pk, the electronic signature σ, and the encrypted data m'.

As a result, by verifying the validity of the electronic signature σ using the zero-knowledge proof, the matching device 201 may secure the authenticity of the encrypted data m', and eventually secure the authenticity of the attribute information m that is the original plain text. For example, when it is possible to prepare the zero-knowledge proof that is also effective for the ciphertext (encrypted data m') and is verifiable with the public key pk originally used for the verification, the matching business operator may confirm that the ciphertext is also authorized by a third party.

Furthermore, according to the matching device 201, a collation result obtained by the collation may be output.

As a result, the matching device 201 may notify the users to be matched (attribute information provider and requirement information provider) and the matching business operator of success or failure of the matching.

Furthermore, according to the matching device 201, in a case where the validity of the electronic signature σ is verified using the proof information (zero-knowledge proof text Π), the calculation result $e(g, h)$ may be acquired from the key management server 202.

As a result, for example, when the validity of the electronic signature σ is not verified and the calculation results are not collated, the matching device 201 may suppress a processing load without performing the processing of acquiring the calculation result $e(g, h)$ from the key management server 202.

Furthermore, according to the matching device 201, in a case where the validity of the electronic signature σ has not been verified using the proof information (zero-knowledge proof text Π), a verification result indicating that the verification of the authenticity of the encrypted data m' has failed may be output.

As a result, the matching device 201 may notify the users to be matched (attribute information provider and requirement information provider) and the matching business operator that the matching may not be performed since the authenticity of the attribute information m that is the original plain text of the encrypted data m' may not be secured.

(Example)

Next, an example of a case where the information processing system 200 according to the first embodiment is applied to recruitment matching in which matching between a plurality of job applicants and a plurality of companies is performed will be described.

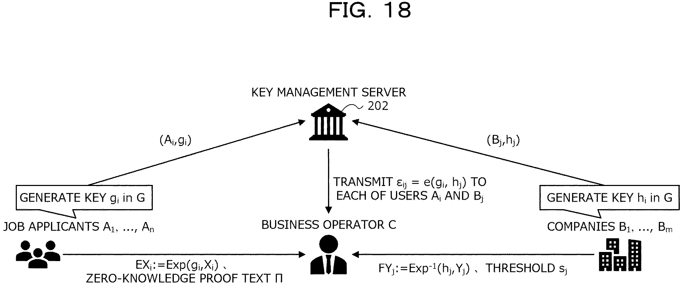

FIG. 18 is an explanatory diagram illustrating the example of the information processing system 200. In FIG. 18, a case is assumed where there are a plurality

of job applicants $A_1$, $A_2$, ..., $A_n$ and a plurality of companies $B_1$, $B_2$, ..., $B_m$. Furthermore, it is assumed that $A_1$, $A_2$, ... , $A_n$ and $B_1$, $B_2$, ..., $B_m$ represent IDs of users.

First, the key management server 202 executes the setup processing (see, for example, FIG. 10). The pairing e: $G \times G \to H$ prepared at the time of setup is non-trivial. It is assumed that G is a group of the prime number orders q, and H is an order p. The pairing e: $G \times G \to H$ is mapping that satisfies conditions of "e($g_1*g_2$, h) = e($g_1$, h)*e($g_2$, h)" and "e(g, $h_1*h_2$) = e(g, $h_1$)*e(g, $h_2$)".

Next, each job applicant $A_i$ (client terminal Ci) executes the key generation/update processing (see, for example, FIG. 11). Furthermore, each company $B_j$ (client terminal Cj) executes the key generation/update processing (see, for example, FIG. 11). As a result, a key $g_i$ of each job applicant $A_i$ is generated and transmitted to the key management server 202. Furthermore, a key $h_j$ of each company $B_j$ is generated and transmitted to the key management server 202.

Here, it is assumed that each job applicant $A_i$ has a plurality of attribute values $X_i$, and each company $B_j$ has an interest in a plurality of attributes, in other words, a plurality of requirement values $Y_j$. Note that it is assumed that the attribute values $X_i$ and the requirement values $Y_j$ are values encoded by the TABLE. Furthermore, it is assumed that each company $B_j$ transmits a threshold $s_j$ to a business operator C (matching device 201) as the number of requirements desired to be satisfied by the job applicant.

Hereinafter, an operation example in a case where matching between the job applicant $A_i$ and the company $B_j$ is performed will be described.

First, the job applicant $A_i$ (client terminal Ci) encrypts $EX_i$: = Exp($g_i$, $X_i$): = $\{g_i^m | m \in X_i\}$ and the attribute value using the key $g_i$, and transmits results of the encryption to the business operator C (matching device 201). Furthermore, the company $B_j$ (client terminal Cj) encrypts $FY_j$: = $Exp^{-1}$($h_j$, $Y_j$): = $\{h_j^{\wedge}(d_n) | n \in Y_j\}$ and the attribute value, and transmits results of the encryption together with the threshold $s_j$ to the business operator C (matching device 201). Note that $d_n = n^{(p-2)} \equiv 1/n \pmod{p}$ holds.

Moreover, the key management server 202 transmits $\varepsilon_{ij} = e(g_i, h_j)$ to the business operator C (matching device 201) in response to a pairing calculation request from the business operator C (matching device 201). Then, the business operator C (matching device 201) calculates $I(\varepsilon_{ij}, EX_i, FY_j)$: = #{ (a, b) $\in EX_i \times FY_j |$e(a, b) = e(g, h)}.

Here, when it is assumed that $d_y = y^{(p-2)} \equiv 1/y$ for x, y $\in$ {0, ..., p-1}, e($g^x$, h^($d_y$)) = e (g, h) and x = y are the same value. To prove that, e($g^x$, h^($d_y$)) = e(g, h)^($xd_y$) holds from the bi-homomorphism of e: $G \times G \to H$. Since the order of H is p, e(g, h)^($xd_y$) = e(g, h) and $xd_y \equiv 1 \pmod{p}$ are the same value, and further, $xd_y \equiv 1 \pmod{p}$ and x = y are the same value. This ends the proof.

As a result, it may be said that $I(\varepsilon_{ij}, EX_i, FY_j)$ is the number of matches between the attribute values $X_i$ submitted by the job applicant $A_i$ and the requirement values $Y_j$ submitted by the company $B_j$. Here, it is assumed that $c_{ij} = 1$ holds in a case where this value is equal to or greater than the threshold $s_j$, and $c_{ij} = 0$ holds in a case where this value is less than the threshold $s_j$. In a case where $c_{ij} = 1$ holds, it means that the job applicant $A_i$ satisfies the requirement of the company $B_j$ (matching success).

For example, in the case where $c_{ij} = 1$ holds, the business operator C (matching device 201) notifies the job applicant $A_i$ (client terminal Ci) of the company $B_j$ (client terminal Cj) and notifies the company $B_j$ (client terminal Cj) of the job applicant $A_i$ (client terminal Ci). As a result, the job applicant $A_i$ and the company $B_j$ are matched. Note that, since it is difficult to perform inverse image calculation of pairing, it may be said that it is difficult for the business operator C to specify the attribute values $X_i$ of the job applicant $A_i$.

Furthermore, it is assumed that each job applicant $A_i$ has desired conditions $Z_i$ and the number $t_i$ of the conditions desired to be satisfied, and there is information $W_j$ in each of the companies $B_j$. In this case, roles of $A_i$ and $B_j$ may be switched, $X_i$ may be changed to $W_j$, $Y_j$ may be changed to $Z_i$, and $s_j$ may be changed to $t_i$, and the matching processing of the information processing system 200 may be executed. It is assumed that, in a case where the number of matches between the desired conditions of the job applicant $A_i$ and company information submitted by the company $B_j$ is equal to or greater than a threshold $t_i$, $d_{ij} = 1$ holds, and in a case where the number of matches is less than the threshold $t_i$, $d_{ij} = 0$ holds. In a case where $d_{ij} = 1$ holds, it means that the company $B_j$ satisfies the desired conditions of the job applicant $A_i$. When $c_{ij}*d_{ij} = 1$ holds, it means that the job applicant $A_i$ and the company $B_j$ have satisfied each other's requests, and thus the business operator C (matching device 201) may assume that matching has succeeded.

Furthermore, the job applicant $A_i$ (client terminal Ci) may generate a ZKP of the electronic signature $\sigma$ in a case where the electronic signature $\sigma$ is added to the attribute value m belonging to the job applicant $A_i$. Here, a case is assumed where a CL signature is added. The ZKP of the electronic signature $\sigma$ may be generated with reference to, for example, Non-Patent Document 2 below.

Non-Patent Document 2: Camenisch, Jan, and Anna Lysyanskaya. "A signature scheme with efficient protocols." International Conference on Security in Communication Networks. Springer, Berlin, Heidelberg, 2002.

First, in the CL signature, it is assumed that a secret key is p, and a public key is (n, a, b, c). Here, it is assumed that n = pq is an RSA modulus, in other words, prime numbers p and q having the same number of bits. Furthermore, it is assumed that a, b, and c are quadratic residues using n as a modulus, in other words, some x, y, and z exist and satisfy $x^2 = a$, $y^2 = b$, and $z^2 = c \pmod{n}$ .

Moreover, for the electronic signature $\sigma$ for the plain text m, $\sigma = $ (s, e, v) holds. Here, (s, e, v) is a set of numbers satisfying $v^e = a^m b^s c$. In order to generate the ZKP of the electronic signature $\sigma$, the job applicant $A_i$ (client terminal Ci) takes a quadratic residue h using n as a modulus, and further takes an element g of a partial cyclic group <h> of a residue group Z/n generated by h.

Then, the job applicant $A_i$ (client terminal Ci) creates the following information (commitment or the like).

A random number $r_m$ and a commitment $C_m$ of m: = $g^m h^\wedge(r_m) \in Z/n$

A random number $s_m$ and a commitment $C_s$ of s: = $g^s h^\wedge(r_s) \in Z/n$

A random number $r_e$ and a commitment $C_e$ of e; = $g^e h^\wedge(r_e) \in Z/n$

A random number w and a mask $C_v$ of v: = $vg^w \in Z/n$

A random number $r_w$ and a commitment $C_w$ of w = $g^w h^\wedge(r_w) \in Z/n$

z: = ew $\in Z$

A random number $r_z$ and a commitment $C_z$ of z = $g^z h^\wedge(r_z) \in Z/n$

C: = $(C_v)^e h^r \in Z/n$

ciphertext m' of attribute value m = $g_i^m$

After disclosing c, $C_m$, $C_s$, $C_e$, $C_v$, $C_w$, $C_z$, C, and m' to the business operator C (matching device 201), the job applicant $A_i$ (client terminal Ci) generates the zero-knowledge proof text $\Pi$ for giving a zero-knowledge proof of knowledge of p, $\sigma$, $\varepsilon$, $\omega$, $\zeta$, $\rho_m$, $\rho_s$, $\rho_e$, $\rho_w$, $\rho_z$, and $\rho$ satisfying the following conditions.

$$C = C_v^\varepsilon h^\rho$$

$$C_e = g^\varepsilon h^\wedge(\rho_e)$$

$$C/c = a^\mu b^\sigma g^\zeta h^\rho$$

$$C_m = g^\mu h^\wedge(\rho_m)$$

$$C_s = g^\sigma h^\wedge(\rho_s)$$

$$C_z = g^\zeta h^\wedge(\rho_z)$$

$$C_w = g^\omega h^\wedge(\rho_w)$$

$$C_z = C_w^\varepsilon h^\wedge(\rho_z - \varepsilon\rho_w)$$

$$m' = g_i^\mu$$

The job applicant $A_i$ (client terminal Ci) transmits c, $C_m$, $C_s$, $C_e$, $C_v$, $C_w$, $C_z$, C, m', and $\Pi$ to the business operator C (matching device 201) as the ZKP of the electronic signature $\sigma$. Then, the business operator C (matching device 201) verifies c, $C_m$, $C_s$, $C_e$, $C_v$, $C_w$, $C_z$, C, m', and $\Pi$.

Note that, in a case where the company $B_j$ submits the attribute value and further the CL signature is added to the attribute value, a ZKP of the signature may be similarly generated on the company side.

(Second Embodiment)

Next, an information processing system 200 according to a second embodiment will be described. In the second embodiment, attribute information m of a user (attribute information provider) and requirement information n of a user (requirement information provider) are encrypted using a random number provided from a trusted third party, thereby enhancing security of the attribute information m and the requirement information n. Note that a part similar to the part of the information processing system 200 of the first embodiment is denoted by the same reference sign, and illustration and description thereof will be omitted.

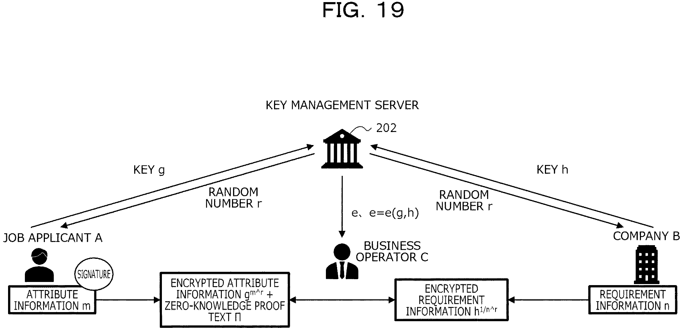

Here, an operation example of the information processing system 200 according to the second embodiment will be described with reference to FIG. 19. Here, a case where a business operator C performs matching between a job applicant A and a company B in recruitment matching will be described as an example. Furthermore, the job applicant A (client terminal Ci) generates a key g, and registers the key g in a key management server 202. Furthermore, the company B (client terminal Cj) generates a key h, and registers the key h in the key management server 202.

FIG. 19 is an explanatory diagram illustrating the operation example of the information processing system 200 according to the second embodiment. In FIG. 19, the business operator C represents a matching business operator, and corresponds to a matching device 201. The job applicant A represents the user (attribute information provider), and corresponds to the client terminal Ci. The company B represents the user (requirement information provider), and corresponds to the client terminal Cj. Note that, in FIG. 19, an electronic signature $\sigma$ is referred to as the "signature".

First, when the job applicant A and the company B are matched, the business operator C (matching device 201) transmits a request indicating that the matching is to be performed to the key management server 202. When the request is received from the business operator C (matching device 201), the key management server 202 generates a random number r and transmits the random number r to each of the job applicant A (client terminal Ci) and the company B (client terminal Cj). The key management server 202 is an example of the trusted third party. The random number r is, for example, a random number having approximately the same bit length as those of the keys g and h.

The job applicant A (client terminal Ci) generates the key g, and registers the key g in the key management server 202. Furthermore, the company B (client terminal Cj) generates the key h, and registers the key h in the key management server 202. The keys g and h are not disclosed to other than the key management server 202. The key management server 202 prepares pairing mapping.

The job applicant A (client terminal Ci) converts an attribute value m (value obtained by encoding the attribute information m by a TABLE) into $g^{m^r}$ using the key g and a random number r, and transmits $g^{m^r}$ to the business operator C (matching device 201). While the attribute value m is converted into $g^m$ in the first embodiment, the attribute value m is converted into $g^{m^r}$ here.

Moreover, in a case where the electronic signature $\sigma$ is added to the attribute information m, the job applicant A (client terminal Ci) generates zero-knowledge proof text $\Pi$ indicating that the electronic signature $\sigma$ is valid for the plain text m of the encrypted data $g^{m^r}$, and transmits the zero-knowledge proof text $\Pi$ to the business operator C (matching device 201). As a result, the job applicant A (client terminal Ci) guarantees authenticity of the encrypted data $g^{m^r}$ submitted to the business operator C.

On the other hand, the company B (client terminal Cj) converts a requirement value n (value obtained by encoding the requirement information n by the TABLE) into $h^{1/n^r}$ using the key h and the random number r, and transmits $h^{1/n^r}$ to the business operator C (matching device 201). While the requirement value n is converted into $h^{1/n}$ in the first embodiment, the requirement value n is converted into $h^{1/n^r}$ here.

The business operator C (matching device 201) accepts the encrypted data $g^{m^r}$ and the zero-knowledge proof text $\Pi$ from the job applicant A (client terminal Ci). Furthermore, the business operator C (matching device 201) accepts the encrypted data $h^{1/n^r}$ from the company B (client terminal Cj). As a result, the encrypted data $g^{m^r}$ of the attribute information m and the zero-knowledge proof text $\Pi$ regarding validity of the electronic signature $\sigma$ added to the attribute information m are given from the job applicant A to the business operator C. Furthermore, the encrypted data $h^{1/n^r}$ of the requirement information n is given from the company B to the business operator C.

The business operator C (matching device 201) receives, from the key management server 202, not the keys g and h of the job applicant A and the company B, but various types of information regarding pairing calculation (pairing e, calculation result e(g, h)). Then, in a case where the validity of the electronic signature $\sigma$ is verified using the zero-knowledge proof text $\Pi$ (verification success), the business operator C (matching device 201) performs matching using a bi-homomorphism of the pairing e without decoding the plain text from the encrypted data.

Specifically, the business operator C (matching device 201) determines whether or not e (g, h) and e $(g^{m^r}, h^{1/n^r})$ match using the encrypted data $g^{m^r}$, the zero-knowledge proof text $\Pi$, the encrypted data $h^{1/n^r}$, the pairing e, and the calculation result e(g, h). Here, in a case where the calculation results match, the business operator C (matching device 201) assumes that the matching has succeeded.

On the other hand, in a case where the calculation results do not match, the business operator C (matching device 201) assumes that the matching has failed. Note that, in a case where the validity of the electronic signature $\sigma$ has not been verified (verification failure), the business operator C (matching device 201) rejects the encrypted data $g^{m^r}$.

As described above, according to the information processing system 200 according to the second embodiment, it is possible to apply a mask using the random number r when encryption of the attribute information m and the requirement information n is performed. As a result, as compared with the information processing system 200 described in the first embodiment, a transmission amount between the devices increases, but security of the attribute information m and the requirement information n may be further enhanced. For example, by calculating the r-th power of m and n, a ratio (m/n) between m and n may be made difficult to understand, so that the security may be further enhanced.

From these, according to the matching device 201 according to the present embodiment, it is possible to provide a secure and safe matching system by securing, while concealing content of data (for example, the attribute information m and the requirement information n) of users to be matched from a matching business operator, authenticity of the data (for example, the attribute information m).

Note that the information processing method described in the present embodiment may be implemented by execution of a program prepared in advance in a computer such as a personal computer or a workstation. The present information processing program is recorded in a computer-readable recording medium such as a hard disk, a flexible disk, a CD-ROM, a DVD, or a USB memory, and is read from the recording medium to be executed by a computer. Furthermore, the present information processing program may be distributed via a network such as the Internet.

Furthermore, the information processing device 101 (matching device 201) described in the present embodiment may also be implemented by a special-purpose IC such as a standard cell or a structured application specific integrated circuit (ASIC) or a programmable logic device (PLD) such as an FPGA.

REFERENCE SIGNS LIST

| 101 | Information processing device |
| --- | --- |
| 102 | Management device |
| 103 | First user |
| 104 | Second user |
| 110 | First data |
| 111 | First encrypted data |
| 112 | Electronic signature |
| 113 | Proof information |
| 120 | Second data |
| 121 | Second encrypted data |
| 130 | First calculation result |
| 140 | Second calculation result |
| 200 | Information processing system |
| 201 | Matching device |
| 202 | Key management server |
| 210 | Network |
| 220 | Key storage DB |
| 300 | Bus |
| 301 | CPU |
| 302 | Memory |
| 303 | Disk drive |
| 304 | Disk |
| 305 | Communication I/F |
| 306 | Portable recording medium I/F |
| 307 | Portable recording medium |
| 501 | Setup processing unit |
| 502, 701 | Acceptance unit |
| 503 | Registration unit |
| 504 | Pairing calculation unit |
| 601 | Key generation unit |
| 602 | Encryption unit |
| 603 | Proof generation unit |
| 604 | Communication unit |
| 702 | Verification unit |
| 703 | Acquisition unit |
| 704 | Collation unit |
| 705 | Output unit |

**Claims**

1. An information processing program for causing a computer to execute processing comprising:

accepting first encrypted data obtained by encrypting first data by indexing that uses a first key, an electronic signature added to the first data, and proof information to prove that the electronic signature is information capable of verifying authenticity of original data of the first encrypted data;
accepting second encrypted data obtained by encrypting second data by indexing that uses a second key;
verifying validity of the electronic signature by using the proof information;
acquiring a first calculation result calculated from the first key and the second key by using a predetermined function from a management device that manages the first key and the second key; and
collating the acquired first calculation result with a second calculation result calculated from the first encrypted data and the second encrypted data by using the predetermined function.

2. The information processing program according to claim 1, wherein, in the processing of collating,
the first calculation result is collated with the second calculation result in a case where the validity of the electronic signature is verified.

3. The information processing program according to claim 1, wherein

the proof information includes zero-knowledge proof text to prove that the electronic signature is the information capable of verifying the authenticity of the original data of the first encrypted data by using a public key of a signer, and
in the processing of verifying,
the validity of the electronic signature is verified by proving the zero-knowledge proof text by using the public key, the electronic signature, and the first encrypted data.

4. The information processing program according to claim 1, wherein the predetermined function is a pairing function that performs calculation that has a bi-homomorphism.

5. The information processing program according to claim 1, wherein

the first data is attribute information that indicates an attribute of a first user, and
the second data is requirement information that indicates a condition for an attribute requested by a second user different from the first user.

6. The information processing program according to claim 1, wherein

the first data is data of a first user,
the second data is data of a second user different from the first user,
the first encrypted data is obtained by encrypting the first data by indexing that uses the first key and a random number issued from the management device to the first user, and
the second encrypted data is obtained by encrypting the second data by indexing that uses the second key and the random number issued from the management device to the second user.

7. The information processing program according to claim 2, for causing the computer to execute the processing further comprising
outputting a collation result obtained by collation.

8. The information processing program according to claim 1, wherein,

in the processing of acquiring,
the first calculation result is acquired from the management device in a case where the validity of the electronic signature is verified.

9. The information processing program according to claim 1, for causing the computer to execute the processing further comprising
outputting a verification result that indicates that verification of authenticity of the first encrypted data has failed in a case where the validity of the electronic signature has not been verified.

10. An information processing method comprising:

accepting first encrypted data obtained by encrypting first data by indexing that uses a first key, an electronic signature added to the first data, and proof information to prove that the electronic signature is information capable of verifying authenticity of original data of the first encrypted data;
accepting second encrypted data obtained by encrypting second data by indexing that uses a second key;
verifying validity of the electronic signature by using the proof information;
acquiring a first calculation result calculated from the first key and the second key by using a predetermined function from a management device that manages the first key and the second key; and
collating the acquired first calculation result with a second calculation result calculated from the first encrypted data and the second encrypted data by using the predetermined function.

11. An information processing device comprising:
a control unit configured to:

accept first encrypted data obtained by encrypting first data by indexing that uses a first key, an electronic signature added to the first data, and proof information to prove that the electronic signature is information capable of verifying authenticity of original data of the first encrypted data;
accept second encrypted data obtained by encrypting second data by indexing that uses a second key;
verify validity of the electronic signature by using the proof information;
acquire a first calculation result calculated from the first key and the second key by using a predetermined function from a management device that manages the first key and the second key; and
collate the acquired first calculation result with a second calculation result calculated from the first encrypted data and the second encrypted data by using the predetermined function.

# FIG. 1

# FIG. 2

200

201

202

220

KEY STORAGE DB

210

C1    C2    • • •    Cn

# FIG. 3

201

304

DISK

301

302

303

| CPU | | MEMORY | | DISK DRIVE |

300

305

306

COMMUNICATION I/F

PORTABLE RECORDING MEDIUM I/F

210

307

NETWORK

PORTABLE RECORDING MEDIUM

# FIG. 4

KEY STORAGE DB ~220

| I D | KEY |
|-----|-----|
| U1 | Key1 |
| U2 | Key2 |
| ⋮ | ⋮ |

400-1 ~ U1 Key1

400-2 ~ U2 Key2

# FIG. 5

202

KEY MANAGEMENT SERVER

501

SETUP PROCESSING UNIT

| ACCEPTANCE UNIT | REGISTRATION UNIT | PAIRING CALCULATION UNIT |
|---|---|---|

502    503    504

Ci

CLIENT TERMINAL

201

MATCHING DEVICE

# FIG. 6

CLIENT TERMINAL — Ci

KEY GENERATION UNIT — 601

ENCRYPTION UNIT — 602

PROOF GENERATION UNIT — 603

COMMUNICATION UNIT — 604

KEY MANAGEMENT SERVER — 202

MATCHING DEVICE — 201

# FIG. 7

KEY MANAGEMENT SERVER — 202

MATCHING DEVICE — 201

Ci — CLIENT TERMINAL

ACCEPTANCE UNIT — 701

ACQUISITION UNIT — 703

COLLATION UNIT — 704

VERIFICATION UNIT — 702

OUTPUT UNIT — 705

Cj — CLIENT TERMINAL

# FIG. 8

802
JOB
APPLICANT

801
BUSINESS
OPERATOR

803
COMPANY

ATTRIBUTE
VALUE m — KEY g → $g^m$ ← ← $h^{1/n}$ ← KEY h — REQUIREMENT
VALUE n

SIGNATURE
σ → ZERO-
KNOWLEDGE
PROOF TEXT Π
OF SIGNATURE σ

FIG. 9

KEY MANAGEMENT SERVER

202

KEY g

KEY h

$e、e_{AB}=e(g,h)$

JOB
APPLICANT A

BUSINESS
OPERATOR C

COMPANY B

SIGNATURE

EDUCATIONAL
BACKGROUND:
GRADUATE OF X
UNIVERSITY

ZERO-
KNOWLEDGE
PROOF TEXT Π

EDUCATIONAL
BACKGROUND:
F32R3

REQUESTED
EDUCATIONAL
BACKGROUND:
4n4Gg,a3QCs,...

REQUESTED EDUCATIONAL
BACKGROUND: GRADUATE
OF X UNIVERSITY,
GRADUATE OF Y
UNIVERSITY, ...

$m$

$g^m$

$h^{1/n1},h^{1/n2},...$

$n1,n2,...$

# FIG. 10

```
                    ┌─────────────┐
                    │    START    │
                    └─────────────┘
                           │
                           ▼
        ┌──────────────────────────────────────┐
        │        SET SET U OF DOMAINS          │──── S1001
        └──────────────────────────────────────┘
                           │
                           ▼
        ┌──────────────────────────────────────┐
        │         SET PRIME NUMBER p           │──── S1002
        └──────────────────────────────────────┘
                           │
                           ▼
        ┌──────────────────────────────────────┐
        │            CREATE TABLE              │──── S1003
        └──────────────────────────────────────┘
                           │
                           ▼
        ┌──────────────────────────────────────┐
        │  SET GROUP G OF PRIME NUMBER ORDERS q │──── S1004
        │  AND GROUP H OF PRIME NUMBER ORDERS p │
        └──────────────────────────────────────┘
                           │
                           ▼
        ┌──────────────────────────────────────┐
        │           SET PAIRING e              │──── S1005
        │        e:G × G → H                    │
        └──────────────────────────────────────┘
                           │
                           ▼
        ┌──────────────────────────────────────┐
        │      DISCLOSE U, TABLE, AND G        │──── S1006
        └──────────────────────────────────────┘
                           │
                           ▼
                    ┌─────────────┐
                    │     END     │
                    └─────────────┘
```

# FIG. 11

```
        ┌──────────────┐
        │    START     │
        └──────┬───────┘
               │
               ▼
┌──────────────────────────────┐
│        GENERATE KEY          │───  S1101
└──────────────┬───────────────┘
               │
               ▼
┌──────────────────────────────┐
│  TRANSMIT KEY REGISTRATION   │───  S1102
│  REQUEST INCLUDING ID AND KEY│
└──────────────┬───────────────┘
               │
               ▼
        ┌──────────────┐
        │     END      │
        └──────────────┘
```

# FIG. 12

START

S1201 — HAS KEY REGISTRATION REQUEST BEEN RECEIVED?   NO

YES

S1202 — REGISTER KEY IN ASSOCIATION WITH ID

END

# FIG. 13

Ci

**CLIENT TERMINAL (ATTRIBUTE INFORMATION PROVIDER)**

Cj

**CLIENT TERMINAL (REQUIREMENT INFORMATION PROVIDER)**

201

**MATCHING DEVICE**

S1301

CONVERT ATTRIBUTE INFORMATION m INTO ATTRIBUTE VALUE m

S1302

ENCRYPT ATTRIBUTE VALUE m TO $g^m$ USING KEY g

S1303

PROOF GENERATION PROCESSING

S1304  TRANSMIT $m' = g^m$, pk, σ, AND Π

S1305

RECEIVE MATCHING REQUEST

S1306

PROOF VERIFICATION PROCESSING

S1307

CONVERT REQUIREMENT INFORMATION n INTO REQUIREMENT VALUE n

S1308

ENCRYPT REQUIREMENT VALUE n TO $h^{(1/n)}$ USING KEY h

S1309  TRANSMIT $n' = h^{(1/n)}$

# FIG. 14

Ci
CLIENT TERMINAL
(ATTRIBUTE
INFORMATION
PROVIDER)

Cj
CLIENT TERMINAL
(REQUIREMENT
INFORMATION
PROVIDER)

201
MATCHING DEVICE

202
KEY MANAGEMENT SERVER

S1401
RECEIVE MATCHING
REQUEST

S1402
TRANSMIT PAIRING
CALCULATION REQUEST

S1403
ACQUIRE KEYS g AND h

S1404
CALCULATE VALUE e(g, h)

TRANSMIT PAIRING e AND
e(g, h)    S1405

S1406
COLLATION
PROCESSING

TRANSMIT MATCHING RESULT   S1407

# FIG. 15

```
                    START

S1501   IS ELECTRONIC
        SIGNATURE σ ADDED        NO
        TO ATTRIBUTE
        INFORMATION m?

             YES

S1502   GENERATE ZERO-KNOWLEDGE
        PROOF TEXT Π

             RETURN
```

# FIG. 16

START

PROVE Π USING pk, σ, AND m'  — S1601

HAS VERIFICATION SUCCEEDED?  — S1602

NO

YES

RETURN

TRANSMIT VERIFICATION RESULT INDICATING THAT VERIFICATION HAS FAILED  — S1603

END

# FIG. 17

```
                    ┌─────────────┐
                    │    START    │
                    └──────┬──────┘
                           │              S1701
                  ┌────────▼─────────────────┐
                  │ RECEIVE PAIRING e AND e(g, h) │
                  └────────┬─────────────────┘
                           │              S1702
                  ┌────────▼─────────────────┐
                  │ CALCULATE e(g^m, h^(1/n)) │
                  └────────┬─────────────────┘
                           │              S1703
                       ╱───▼────╲
                      ╱  DO e(g, h) ╲           NO
                     ◄ AND e(g^m, h^(1/n)) ├──────────┐
                      ╲   MATCH?   ╱                  │
                       ╲────┬────╱                    │
                      YES   │        S1704            │     S1705
                  ┌─────────▼──────────┐      ┌───────▼──────────┐
                  │ MATCHING HAS SUCCEEDED │   │ MATCHING HAS FAILED │
                  └─────────┬──────────┘      └───────┬──────────┘
                            │◄──────────────────────┘
                    ┌───────▼──────┐
                    │    RETURN    │
                    └──────────────┘
```

# FIG. 18

KEY MANAGEMENT SERVER

$\sim$ 202

$(A_i, g_i)$

$(B_j, h_j)$

GENERATE KEY $g_i$ in G

TRANSMIT $\varepsilon_{ij} = e(g_i, h_j)$ TO
EACH OF USERS $A_i$ AND $B_j$

GENERATE KEY $h_i$ in G

JOB APPLICANTS $A_1, ..., A_n$

BUSINESS OPERATOR C

COMPANIES $B_1, ..., B_m$

$EX_i := Exp(g_i, X_i)$ 、
ZERO-KNOWLEDGE PROOF TEXT $\Pi$

$FY_j := Exp^{-1}(h_j, Y_j)$ 、 THRESHOLD $s_j$

FIG. 19

KEY MANAGEMENT SERVER

202

KEY g

RANDOM
NUMBER r

e、 e=e(g,h)

RANDOM
NUMBER r

KEY h

JOB APPLICANT A

SIGNATURE

ATTRIBUTE
INFORMATION m

BUSINESS
OPERATOR C

COMPANY B

ENCRYPTED ATTRIBUTE
INFORMATION $g^{m\wedge r}$ +
ZERO-KNOWLEDGE PROOF
TEXT Π

ENCRYPTED
REQUIREMENT
INFORMATION $h^{1/n\wedge r}$

REQUIREMENT
INFORMATION n

**EP 4 443 813 A1**

## INTERNATIONAL SEARCH REPORT

International application No.

**PCT/JP2021/044588**

### A. CLASSIFICATION OF SUBJECT MATTER

*H04L 9/32*(2006.01)i; *G06F 7/04*(2006.01)i
FI: H04L9/32 200C; G06F7/04

According to International Patent Classification (IPC) or to both national classification and IPC

### B. FIELDS SEARCHED

Minimum documentation searched (classification system followed by classification symbols)

H04L9/32; G06F7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); IEEE Xplore privacy preserving matching, bilinear diffie-hellman problem

### C. DOCUMENTS CONSIDERED TO BE RELEVANT

| Category* | Citation of document, with indication, where appropriate, of the relevant passages | Relevant to claim No. |
|---|---|---|
| A | JP 2015-215491 A (NIPPON TELEGR. & TELEPH. CORP.) 03 December 2015 (2015-12-03)<br>paragraphs [0001]-[0082] | 1-11 |
| A | XU, J., LIN, Z. and WU, J. Privacy-Preserving Task-Matching and Multiple-Submissions Detection in Crowdsourcing. Sensor. 26 April 2021, vol. 21, no. 9, pages 1-19, <URL:https://doi.org/10.3390/s21093036><br>3. Preliminary, 4. Model of zk-MIPE, 5. zk-MIPE Scheme | 1-11 |
| A | SHU, J. et al. Proxy-Free Privacy-Preserving Task Matching with Efficient Revocation in Crowdsourcing. IEEE Transactions on Dependable and Secure Computing. 15 January 2021, vol. 18, no. 1, pages 117-130, <DOI:10.1109/TDSC.2018.2875682><br>3 Models and Preliminaries, 4 The Pmatch Scheme | 1-11 |
| A | ELKHIYAOUI, K., BLASS, E. -O. and MOLVA, R. T-MATCH: Privacy-Preserving Item Matching for Storage-Only RFID Tags. Cryptology ePrint Archive [online]. August 2012, pages 1-18, <URL:https://eprint.iacr.org/2012/465/20120818:034353><br>abstract, 2 Preliminaries, 4 Protocol | 1-11 |

☑ Further documents are listed in the continuation of Box C.     ☑ See patent family annex.

| | | |
|---|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| **15 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

39

**INTERNATIONAL SEARCH REPORT**

International application No.

**PCT/JP2021/044588**

**C.    DOCUMENTS CONSIDERED TO BE RELEVANT**

| Category* | Citation of document, with indication, where appropriate, of the relevant passages | Relevant to claim No. |
|---|---|---|
| A | BONEH, D. and BOYEN, X. Short Signatures Without Random Oracles. Lecture Notes in Computer Science. vol. 3027, 2004, pages 56-73<br>3.1 A Weakly Secure Short Signature Scheme | 1-11 |

Form PCT/ISA/210 (second sheet) (January 2015)

## INTERNATIONAL SEARCH REPORT
### Information on patent family members

International application No.

**PCT/JP2021/044588**

| Patent document cited in search report | Publication date (day/month/year) | Patent family member(s) | Publication date (day/month/year) |
|---|---|---|---|
| JP 2015-215491 A | 03 December 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150149208

- JP 2016071639 A

**Non-patent literature cited in the description**

- Relational hash: probabilistic hash for verifying relations, secure against forgery and more. **MANDAL ; AVRADIP ; ARNAB ROY.** Annual Cryptology Conference. Springer, 2015

- A signature scheme with efficient protocols. **CAMENISCH ; JAN ; ANNA LYSYANSKAYA.** International Conference on Security in Communication Networks. Springer, 2002